(19) Europäisches Patentamt
European Patent Office
Office européen des brevets

(11) **EP 3 809 698 A1**

(12) **EUROPEAN PATENT APPLICATION**
published in accordance with Art. 153(4) EPC

(43) Date of publication:
**21.04.2021 Bulletin 2021/16**

(51) Int Cl.:
**H04N 9/64** (2006.01)   **H04N 9/77** (2006.01)

(21) Application number: **19831344.7**

(86) International application number:
**PCT/CN2019/090687**

(22) Date of filing: **11.06.2019**

(87) International publication number:
**WO 2020/007166 (09.01.2020 Gazette 2020/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2018 CN 201810733132**
**19.07.2018 CN 201810799603**

(71) Applicant: **HUAWEI TECHNOLOGIES CO., LTD.**
**Shenzhen, Guangdong 518129 (CN)**

(72) Inventors:
• **WANG, Zheng**
 **Shenzhen, Guangdong 518129 (CN)**
• **YUAN, Le**
 **Shenzhen, Guangdong 518129 (CN)**
• **WU, Renjian**
 **Shenzhen, Guangdong 518129 (CN)**
• **HUANG, Fang**
 **Shenzhen, Guangdong 518129 (CN)**

(74) Representative: **Maiwald Patent- und Rechtsanwaltsgesellschaft mbH**
**Engineering**
**Elisenhof**
**Elisenstrasse 3**
**80335 München (DE)**

(54) **VIDEO SIGNAL PROCESSING METHOD AND APPARATUS**

(57)    This application discloses a video signal processing method and apparatus, which can perform chrominance compensation on a to-be-processed video signal based on a saturation adjustment factor corresponding to an initial luminance value of the to-be-processed video signal, so that a color that is of the video signal obtained after chrominance compensation and that is perceived by human eyes is closer to a color of the video signal obtained before luminance mapping.

```
                                              ┌─ S101
┌─────────────────────────────────────────────────────────┐
│ Determine a saturation adjustment factor corresponding   │
│ to an initial luminance value of a to-be-processed       │
│ video signal                                             │
└─────────────────────────────────────────────────────────┘
                         │
                         ▼                    ┌─ S102
┌─────────────────────────────────────────────────────────┐
│ Adjust a chrominance value of the to-be-processed video  │
│ signal based on the saturation adjustment factor         │
└─────────────────────────────────────────────────────────┘
```

FIG. 4

**Description**

This application claims priority to Chinese Patent Application No. 201810733132.3, filed with the China National Intellectual Property Administration on July 5, 2018 and entitled "DISPLAY SIGNAL PROCESSING METHOD AND APPARATUS", and claims priority to Chinese Patent Application No. 201810799603.0, filed with the China National Intellectual Property Administration on July 19, 2018 and entitled "VIDEO SIGNAL PROCESSING METHOD AND APPARATUS", which are incorporated herein by reference in their entireties.

**TECHNICAL FIELD**

This application relates to the field of display technologies, and in particular, to a video signal processing method and apparatus.

**BACKGROUND**

High dynamic range (High Dynamic Range, HDR) is a hotspot technology recently emerging in the video industry, and also is a future development direction of the video industry. Compared with a conventional standard dynamic range (standard dynamic range, SDR) video signal, an HDR video signal has a larger dynamic range and higher luminance. However, a large quantity of existing display devices cannot reach luminance of the HDR video signal. Therefore, when an HDR video signal is displayed, luminance mapping processing needs to be performed on the HDR signal based on a capability of a display device, so that it is suitable for displaying on the current device. An HDR signal luminance processing method based on red-green-blue (red-green-blue, RGB) space is a common method, and actually, is widely applied in display devices.

In the HDR video signal luminance mapping method based on RGB space, a common processing method is to replace a luminance mapping formula $C_{out} = (L_{out}/L_{in}) \times C_{in}$ with a formula $C_{out} = ((C_{in}/L_{in} - 1) \times s + 1) \times L_{out}$, to implement luminance mapping by introducing a color saturation adjustment factor s, where $L_{in}$ is linear luminance of an HDR signal obtained before luminance mapping, $L_{out}$ is linear luminance of the HDR signal obtained after the luminance mapping, $C_{in}$ is a linear signal color component $R_{in}$, $G_{in}$, or $B_{in}$ of the HDR signal obtained before the luminance mapping, and $C_{out}$ is a linear signal color component $R_{out}$, $G_{out}$, or $B_{out}$ of the HDR signal obtained after the luminance mapping. However, according to the foregoing formula, color saturation of adjusted $R_{out}$, $G_{out}$, and $B_{out}$ changes, leading to a severe hue shift (Hue Shift). To be specific, a color that is of the video signal obtained after the luminance mapping and that is perceived by human eyes deviates from a color of the HDR video signal obtained before the luminance mapping.

**SUMMARY**

This application provides a video signal processing method and apparatus, to resolve a problem that in a method for performing luminance mapping on an HDR signal based on RGB space a hue shift is caused because color saturation is adjusted during luminance mapping.

According to a first aspect, an embodiment of this application provides a video signal processing method, including the following steps: determining a saturation adjustment factor corresponding to an initial luminance value of a to-be-processed video signal, where a mapping relationship between the saturation adjustment factor and the initial luminance value is determined by a saturation mapping curve, the saturation mapping curve is determined by a ratio of an adjusted luminance value to the initial luminance value, and the adjusted luminance value is obtained by mapping the initial luminance value based on a preset luminance mapping curve; and adjusting a chrominance value of the to-be-processed video signal based on the saturation adjustment factor.

According to the foregoing method, chrominance adjustment can be performed on the to-be-processed video signal, and color saturation of a video signal whose chrominance value has been adjusted is improved through chrominance compensation, so that a color that is of the video signal obtained after the chrominance adjustment and that is perceived by human eyes is closer to a color of the video signal obtained before luminance mapping.

In a possible design, the saturation mapping curve is a function using the initial luminance value as an independent variable and using the ratio of the adjusted luminance value to the initial luminance value as a dependent variable.

Therefore, the saturation mapping curve may be represented by using the function, and the function represents a mapping relationship between the initial luminance value and the ratio of the adjusted luminance value to the initial luminance value.

In a possible design, the saturation adjustment factor is determined according to the following formula:

$$f_{sm}NLTF1(eNLTF1) = f_{tm}NLTF1(eNLTF1)/eNLTF1,$$

where

eNLTF1 is the initial luminance value, $f_{tm}NLTF1()$ represents the luminance mapping curve, $f_{sm}NLTF1()$ represents the saturation mapping curve, and correspondingly, $f_{tm}NLTF1(eNLTF1)$ represents the adjusted luminance value corresponding to the initial luminance value, and $f_{sm}NLTF1(eNLTF1)$ represents the saturation adjustment factor corresponding to the initial luminance value.

When the saturation adjustment factor corresponding to the initial luminance value of the to-be-processed video signal is to be determined, the initial luminance value of the to-be-processed video signal may be used as an independent variable of the foregoing formula, and a calculated dependent variable is used as the saturation adjustment factor corresponding to the initial luminance value of the to-be-processed video signal.

In a possible design, the saturation adjustment factor is determined by a mapping relationship table, and the mapping relationship table includes a horizontal coordinate value and a vertical coordinate value of at least one sampling point on the saturation mapping curve.

Therefore, the saturation mapping curve may be represented based on the mapping relationship table. When the saturation adjustment factor corresponding to the initial luminance value of the to-be-processed video signal is to be determined, the saturation adjustment factor corresponding to the initial luminance value of the to-be-processed video signal may be determined through table lookup and by using a linear interpolation.

In a possible design, the adjusting a chrominance value of the to-be-processed video signal includes: adjusting the chrominance value of the to-be-processed video signal based on a product of a preset chrominance component gain coefficient and the saturation adjustment factor.

In a possible design, the chrominance value includes a first chrominance value of a first chrominance signal corresponding to the to-be-processed video signal and a second chrominance value of a second chrominance signal corresponding to the to-be-processed video signal, the preset chrominance component gain coefficient includes a preset first chrominance component gain coefficient and a preset second chrominance component gain coefficient, and the chrominance value of the to-be-processed video signal may be adjusted based on the product of the preset chrominance component gain coefficient and the saturation adjustment factor by using the following method: adjusting the first chrominance value based on a product of the preset first chrominance component gain coefficient and the saturation adjustment factor; and adjusting the second chrominance value based on a product of the preset second chrominance component gain coefficient and the saturation adjustment factor.

In a possible design, if the saturation mapping curve belongs to target nonlinear space and a preset first original luminance mapping curve is a nonlinear curve, the method further includes: separately performing nonlinear-space-to-linear-space conversion on a first horizontal coordinate value and a first vertical coordinate value that correspond to at least one sampling point on the first original luminance mapping curve, to obtain a second horizontal coordinate value and a second vertical coordinate value; separately performing linear-space-to-nonlinear-space conversion on the second horizontal coordinate value and the second vertical coordinate value, to obtain the initial luminance value and the adjusted luminance value; and determining the luminance mapping curve based on a mapping relationship between the initial luminance value and the adjusted luminance value, where the luminance mapping curve belongs to the target nonlinear space.

Therefore, the saturation mapping curve belonging to the target nonlinear space can be determined based on the first original luminance mapping curve that is nonlinear.

In a possible design, if the saturation mapping curve belongs to target nonlinear space and a preset second original luminance mapping curve is a linear curve, the method further includes: separately performing linear-space-to-nonlinear-space conversion on a third horizontal coordinate value and a third vertical coordinate value that correspond to at least one sampling point on the second original luminance mapping curve, to obtain the initial luminance value and the adjusted luminance value; and determining the luminance mapping curve based on a mapping relationship between the initial luminance value and the adjusted luminance value, where the luminance mapping curve belongs to the target nonlinear space.

Therefore, the saturation mapping curve belonging to the target nonlinear space can be determined based on the second original luminance mapping curve that is linear.

In a possible design, the method further includes: adjusting the initial luminance value based on the luminance mapping curve, to obtain the adjusted luminance value.

In a possible design, the initial luminance value may be adjusted based on the luminance mapping curve by using the following method, to obtain the adjusted luminance value: determining, based on a target first horizontal coordinate value corresponding to the initial luminance value, a target first vertical coordinate value corresponding to the target first horizontal coordinate as the adjusted luminance value.

In a possible design, the initial luminance value may be adjusted based on the luminance mapping curve by using the following method, to obtain the adjusted luminance value: determining, based on a target third horizontal coordinate value corresponding to the initial luminance value, a target third vertical coordinate value corresponding to the target third horizontal coordinate as the adjusted luminance value.

According to a second aspect, an embodiment of this application provides a video signal processing apparatus. The apparatus has a function of implementing the method provided in the first aspect and any possible design of the first aspect. The function may be implemented by hardware, or may be implemented by hardware executing corresponding software, or may be implemented by a combination of software and hardware. The hardware or software includes one or more modules corresponding to the function.

The video signal processing apparatus provided in this embodiment of this application may include a first determining unit and an adjustment unit. The first determining unit may be configured to determine a saturation adjustment factor corresponding to an initial luminance value of a to-be-processed video signal, where a mapping relationship between the saturation adjustment factor and the initial luminance value is determined by a saturation mapping curve, the saturation mapping curve is determined by a ratio of an adjusted luminance value to the initial luminance value, and the adjusted luminance value is obtained by mapping the initial luminance value based on a preset luminance mapping curve. The adjustment unit may be configured to adjust a chrominance value of the to-be-processed video signal based on the saturation adjustment factor.

According to the foregoing structure, the first determining unit of the video signal processing apparatus may determine the saturation adjustment factor, and the adjustment unit of the video signal processing apparatus may adjust the chrominance value of the to-be-processed video signal based on the saturation adjustment factor.

In a possible design, the saturation mapping curve is a function using the initial luminance value as an independent variable and using the ratio as a dependent variable.

In a possible design, the saturation adjustment factor may be determined according to the following formula: $f_{sm}NLTF1(eNLTF\ 1) = f_{tm}NLTF1(eNLTF1)/eNLTF\ 1$, where eNLTF 1 is the initial luminance value, $f_{tm}NLTF1\ ()$ represents the luminance mapping curve, $f_{sm}NLTF1()$ represents the saturation mapping curve, correspondingly, $f_{tm}NLTF1(eNLTF1)$ represents the adjusted luminance value corresponding to the initial luminance value, and $f_{sm}NLTF1(eNLTF1)$ represents the saturation adjustment factor corresponding to the initial luminance value.

In a possible design, the saturation adjustment factor may be determined by a mapping relationship table, and the mapping relationship table includes a horizontal coordinate value and a vertical coordinate value of at least one sampling point on the saturation mapping curve.

In a possible design, the adjustment unit may adjust the chrominance value of the to-be-processed video signal based on a product of a preset chrominance component gain coefficient and the saturation adjustment factor.

In a possible design, the chrominance value includes a first chrominance value of a first chrominance signal corresponding to the to-be-processed video signal and a second chrominance value of a second chrominance signal corresponding to the to-be-processed video signal, the preset chrominance component gain coefficient includes a preset first chrominance component gain coefficient and a preset second chrominance component gain coefficient, and the adjustment unit may be specifically configured to adjust the first chrominance value based on a product of the preset first chrominance component gain coefficient and the saturation adjustment factor, and adjust the second chrominance value based on a product of the preset second chrominance component gain coefficient and the saturation adjustment factor.

In a possible design, the saturation mapping curve belongs to target nonlinear space, a preset first original luminance mapping curve is a nonlinear curve, and the video signal processing apparatus may further include a first conversion unit, a second conversion unit, and a second determining unit. The first conversion unit is configured to separately perform nonlinear-space-to-linear-space conversion on a first horizontal coordinate value and a first vertical coordinate value that correspond to at least one sampling point on the first original luminance mapping curve, to obtain a second horizontal coordinate value and a second vertical coordinate value. The second conversion unit is configured to separately perform linear-space-to-nonlinear-space conversion on the second horizontal coordinate value and the second vertical coordinate value, to obtain the initial luminance value and the adjusted luminance value. The second determining unit is configured to determine the luminance mapping curve based on a mapping relationship between the initial luminance value and the adjusted luminance value, where the luminance mapping curve belongs to the target nonlinear space.

In a possible design, if the saturation mapping curve belongs to target nonlinear space and a preset second original luminance mapping curve is a linear curve, the video signal processing apparatus may further include a third conversion unit and a third determining unit. The third conversion unit is configured to perform linear-space-to-nonlinear-space conversion on a third horizontal coordinate value and a third vertical coordinate value that correspond to at least one sampling point on the second original luminance mapping curve, to obtain the initial luminance value and the adjusted luminance value. The third determining unit is configured to determine the luminance mapping curve based on a mapping relationship between the initial luminance value and the adjusted luminance value, where the luminance mapping curve belongs to the target nonlinear space.

In a possible design, the video signal processing apparatus may further include a luminance adjustment unit, configured to adjust the initial luminance value based on the luminance mapping curve, to obtain the adjusted luminance value.

In a possible design, the luminance adjustment unit is specifically configured to determine, based on a target first horizontal coordinate value corresponding to the initial luminance value, a target first vertical coordinate value corresponding to the target first horizontal coordinate as the adjusted luminance value.

In a possible design, the luminance adjustment unit is specifically configured to determine, based on a target third horizontal coordinate value corresponding to the initial luminance value, a target third vertical coordinate value corresponding to the target third horizontal coordinate as the adjusted luminance value.

According to a third aspect, an embodiment of this application provides a video signal processing apparatus. The apparatus includes a processor and a memory. The memory is configured to store a necessary instruction and necessary data, and the processor invokes the instruction in the memory to implement the function in the method embodiment in the first aspect and any possible design of the method embodiment.

According to a fourth aspect, an embodiment of this application provides a computer program product, including a computer program. When the computer program is executed on a computer or a processor, the computer or the processor is enabled to implement the function in the method embodiment in the first aspect and any possible design of the method embodiment.

According to a fifth aspect, an embodiment of this application provides a computer-readable storage medium, configured to store a program and an instruction. When the program and the instruction are invoked and executed on a computer, the computer may be enabled to implement the function in the method embodiment in the first aspect and any possible design of the method embodiment.

## DESCRIPTION OF DRAWINGS

FIG. 1a is a schematic diagram of an example PQ EOTF curve according to an embodiment of this application;

FIG. 1b is a schematic diagram of an example PQ EOTF$^{-1}$ curve according to an embodiment of this application;

FIG. 2a is a schematic diagram of an example HLG OETF curve according to an embodiment of this application;

FIG. 2b is a schematic diagram of an example HLG OETF$^{-1}$ curve according to an embodiment of this application;

FIG. 3a is a schematic architectural diagram of an example video signal processing system according to an embodiment of this application;

FIG. 3b is a schematic architectural diagram of another example video signal processing system according to an embodiment of this application;

FIG. 3c is a schematic structural diagram of an example video signal processing apparatus according to an embodiment of this application;

FIG. 4 is a schematic diagram of steps of an example video signal processing method according to an embodiment of this application;

FIG. 5 is a schematic diagram of an example saturation mapping curve according to an embodiment of this application;

FIG. 6 is a schematic diagram of an example luminance mapping curve according to an embodiment of this application;

FIG. 7 is a schematic flowchart of example luminance mapping according to an embodiment of this application;

FIG. 8 is a schematic flowchart of an example video signal processing method according to an embodiment of this application;

FIG. 9 is a schematic flowchart of another example video signal processing method according to an embodiment of this application;

FIG. 10 is a schematic flowchart of another example video signal processing method according to an embodiment of this application;

FIG. 11 is a schematic structural diagram of another example video signal processing apparatus according to an embodiment of this application;

FIG. 12a is a schematic structural diagram of another example video signal processing apparatus according to an embodiment of this application;

FIG. 12b is a schematic structural diagram of another example video signal processing apparatus according to an embodiment of this application;

FIG. 12c is a schematic structural diagram of another example video signal processing apparatus according to an embodiment of this application;

FIG. 13 is a schematic flowchart of an example color gamut conversion method according to an embodiment of this application; and

FIG. 14 is a schematic flowchart of an example method for conversion from an HDR HLG signal to HDR PQTV according to an embodiment of this application.

## DETAILED DESCRIPTION OF EMBODIMENTS

To make the objectives, technical solutions, and advantages of this application clearer, the following further describes this application in detail with reference to the accompanying drawings.

The term "at least one" in this application means one or more than one, namely, including one, two, three, or more, and the term "a plurality of" means two or more than two, namely, including two, three, or more.

First, for ease of understanding of the embodiments of this application, some concepts or terms in the embodiments of this application are explained.

A color value (color value) is a value corresponding to a particular color component (for example, R, G, B, or Y) of a picture.

A digital code value (digital code value) is a digital expression value of a picture signal, and the digital code value is used to represent a nonlinear color value.

A linear color value (linear color value) is in direct proportion to light intensity, should be normalized to [0, 1] in an optional case, and is abbreviated as E.

A nonlinear color value (nonlinear color value) is a normalized digital expression value of image information, is in direct proportion to a digital code value, should be normalized to [0, 1] in an optional case, and is abbreviated as E'.

An electro-optical transfer function (electro-optical transfer function, EOTF) describes a relationship of conversion from a nonlinear color value to a linear color value.

An optical-electro transfer function (optical-electro transfer function, OETF) describes a relationship of conversion from a linear color value to a nonlinear color value.

Metadata (Metadata) is data that is carried in a video signal and that describes video source information.

Dynamic metadata (dynamic metadata) is metadata associated with each frame of image, and the metadata changes with images.

Static metadata (static metadata) is metadata associated with an image sequence, and the metadata remains unchanged in the image sequence.

A luminance signal (luma) represents a combination of nonlinear primary color signals, and a symbol is Y'.

Luminance mapping (luminance mapping) is mapping from luminance of a source picture to luminance of a target system.

A color volume (colour volume) is a volume of chrominance and luminance that can be presented by a display in chrominance space.

Display adaptation (display adaptation) is to process a video signal to adapt to a display property of a target display.

A source picture (source picture) is a picture that is input in an HDR pre-processing stage.

A mastering display (Mastering Display) is a reference display used when a video signal is edited and produced, and is used to determine an editing and producing effect of a video.

A linear scene light (Linear Scene Light) signal is an HDR video signal using content as scene light in an HDR video technology, is scene light captured by a camera/lens sensor, and generally is a relative value. HLG coding is performed on the linear scene light signal to obtain an HLG signal. The HLG signal is a scene light signal. The HLG signal is nonlinear. The scene light signal generally needs to be converted into a display light signal through OOTF, to be displayed on a display device.

A linear display light (Linear Display Light) signal is an HDR video signal using content as display light in an HDR video technology, is display light emitted by a display device, and generally is an absolute value in a unit of nit. PQ coding is performed on the linear display light signal to obtain a PQ signal, the PQ signal is a display light signal, and the PQ signal is a nonlinear signal. The display light signal generally is displayed on the display device based on absolute luminance thereof.

An opto-optical transfer function (OOTF) describes a curve used to convert one light signal into another light signal in a video technology.

A dynamic range (Dynamic Range) is a ratio of highest luminance to lowest luminance of a video signal.

Luma-chroma-chroma (Luma-Chroma-Chroma, LCC) is three components of a video signal in which luminance and chrominance are separated.

A perceptual quantizer (Perceptual Quantizer, PQ) is an HDR standard, and also is an HDR conversion equation. The PQ is determined based on a visual capability of a person. A video signal displayed on a display device generally is a video signal in a PQ coding format.

A PQ EOTF curve is used to convert, into a linear light signal, an electrical signal on which PQ coding has been performed, and a unit is nit. A conversion formula is:

$$PQ\_EOTF(E') = 10000 \left(\frac{max[(E'^{1/m_2} - c_1),0]}{c_2 - c_3 E'^{1/m_2}}\right)^{1/m_1} \quad (1),$$

where

E' is an input electrical signal, and has a value range [0, 1], and fixed parameter values are as follows:

m1 = 2610/16384 = 0.1593017578125;
m2 = 2523/4096 x 128 = 78.84375;
c1 = 3424/4096 = 0.8359375 = c3 - c2 + 1;
c2 = 2413/4096 x 32 = 18.8515625; and
c3 = 2392/4096 x 32 = 18.6875.

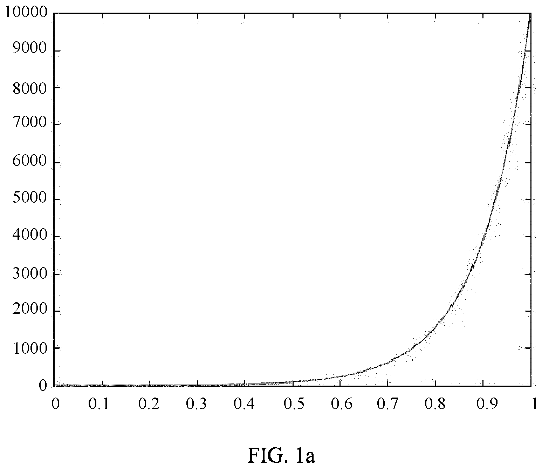

The PQ EOTF curve is shown in FIG. 1a, an input is an electrical signal in a range of [0, 1], and an output is a [0, 10000]-nit linear light signal.

A PQ EOTF$^{-1}$ curve is an inverse curve of the PQ EOTF curve. A physical meaning is to convert a [0, 10000]-nit linear light signal into an electrical signal on which PQ coding has been performed. A conversion formula is:

$$PQ\_EOTF^{-1}(E) = \left(\frac{c_1 + c_2(E/10000)^{m_1}}{1 + c_3(E/10000)^{m_1}}\right)^{m_2} \quad (2).$$

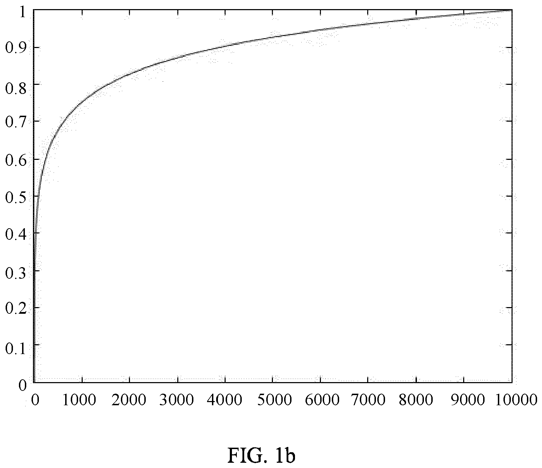

The PQ EOTF$^{-1}$ curve is shown in FIG. 1b, an input is a [0, 10000]-nit linear light signal, and an output is an electrical signal in a range of [0, 1].

Color gamut (Color Gamut) is a range of colors included in color space, and related color gamut standards are BT.709 and BT.2020.

Hybrid log gamma (Hybrid Log Gamma, HLG) is an HDR standard. A video signal captured by a camera, a video camera, an image sensor, or another type of image capturing device is a video signal in an HLG coding format.

An HLG OETF curve is a curve used to perform HLG coding on a linear scene light signal to convert the linear scene light signal into a nonlinear electrical signal. A conversion formula is shown as follows:

$$E' = \begin{cases} \sqrt{3 \text{ x } E} & 0 \leq E \leq 1/12 \\ a \text{ x } \ln(12 \text{ x } E - b) + c & 1/12 < E \leq 1 \end{cases} \quad (3),$$

where

E is an input linear scene light signal, and has a range of [0, 1], and E' is an output nonlinear electrical signal, and has a range of [0, 1].

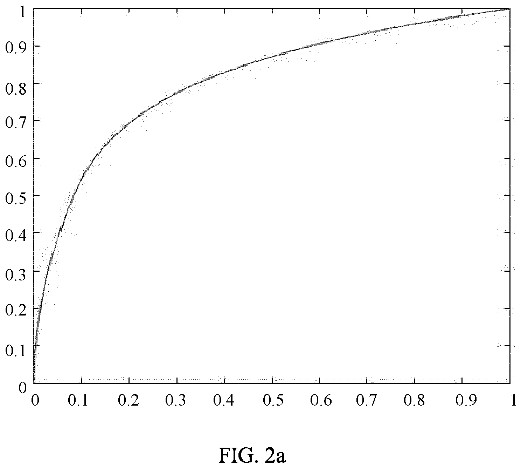

Fixed parameters are a = 0.17883277, b = 0.28466892, and c = 0.55991073. FIG. 2a is an example diagram of the HLG OETF curve.

An HLG OETF$^{-1}$ curve is an inverse curve of the HLG OETF curve, and is used to convert, into a linear scene light signal, a nonlinear electrical signal on which HLG coding has been performed. For example, a conversion formula is shown as follows:

$$E = \begin{cases} E'^2/3, & 0 \leq E' \leq 1/2 \\ \left(\exp\left(\frac{(E' - c)}{a}\right) + b\right)/12, & 1/2 < E' \leq 1 \end{cases} \quad (4).$$

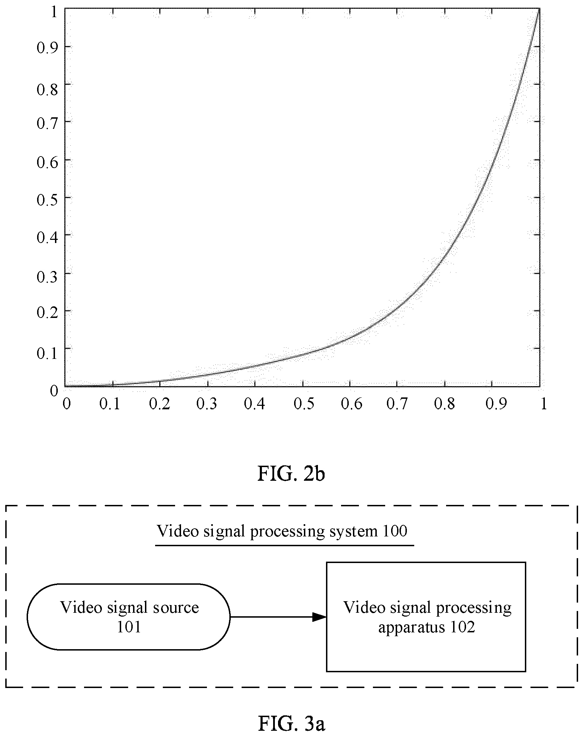

FIG. 2b is an example diagram of the HLG OETF$^{-1}$ curve. E' is an input nonlinear electrical signal, and has a range of [0, 1], and E is an output linear scene light signal, and has a range of [0, 1].

Linear space in this application is space in which a linear light signal is located.

Nonlinear space in this application is space in which a signal obtained after a linear light signal is converted by using a nonlinear curve is located. Common nonlinear curves of the HDR include the PQ EOTF-1 curve, the HLG OETF curve, and the like, and a common nonlinear curve of the SDR includes a gamma curve. Generally, it is considered that a signal obtained after a linear light signal is coded by using the nonlinear curve is visually linear relative to human eyes. It should be understood that the nonlinear space may be considered as visual linear space.

Gamma correction (Gamma Correction) is a method for performing nonlinear hue editing on a picture. A dark-colored part and a light-colored part in the picture signal can be detected, and proportions of the dark-colored part and the light-colored part are increased, to improve a picture contrast effect. Optical-electro transfer features of existing screens, photographic films, and many electronic cameras may be nonlinear. A relationship between an output and an input of the nonlinear component may be represented by using a power function, namely, output = (input)$^\gamma$.

Because a visual system of the human being is nonlinear, and the human being perceives a visual stimulation through comparison, nonlinear conversion is performed on a color value output by a device. Stimulation is enhanced by the outside world at a particular proportion, and for the human being, such stimulation evenly increases. Therefore, for perception of the human being, a physical quantity increasing in a geometric progression is even. To display input colors based on a visual law of the human being, nonlinear conversion in the form of the power function is needed, to convert a linear color value into a nonlinear color value. A value $\gamma$ of gamma may be determined based on an optical-electro transfer curve of color space.

For the color space (Color Space), colors may be different perceptions of eyes for light rays having different frequencies, or may represent objectively existing light having different frequencies. The color space is a color range defined by a coordinate system that is established by people to represent colors. Color gamut and a color model define color space together. The color model is an abstract mathematical model that represents a color by using a group of color components. The color model may be, for example, a red green blue (red green blue, RGB) mode and a printing cyan magenta yellow key (cyan magenta yellow key plate, CMYK) mode. The color gamut is a sum of colors that can be generated by a system. For example, Adobe RGB and sRGB are different color space based on an RGB model.

Each device such as a display or a printer has its own color space, and can generate colors only in its color gamut. When an image is transferred from one device to another device, because the device converts the image based on its own color space and displays RGB or CMYK, colors of the image may change on different devices.

The RGB space in the embodiments of this application is space in which a video signal is quantitatively represented by using luminance of red, green, and blue. YCC space is color space representing separation of luminance and chrominance in this application. Three components of a YCC-space video signal respectively represent luminance-chrominance-chrominance. Common YCC-space video signals include YUV, YCbCr, ICtCp, and the like.

Linear space in the embodiments of this application is space in which a linear light signal is located.

Nonlinear space in the embodiments of this application is space in which a signal obtained after a linear light signal is converted by using a nonlinear curve is located. Common nonlinear curves of the HDR include the PQ EOTF-1 curve, the HLG OETF curve, and the like. A common nonlinear curve of the SDR includes the gamma curve.

The embodiments of this application provide a video signal processing method and apparatus. According to the method, a chrominance value of a to-be-processed video signal can be adjusted based on a saturation adjustment factor corresponding to an initial luminance value of the to-be-processed video signal, to perform chrominance compensation for the to-be-processed video signal, to compensate for a saturation change caused because RGB space luminance mapping is performed on the to-be-processed video signal, and alleviate a hue shift phenomenon.

The following describes in detail the embodiments of this application with reference to the accompanying drawings. First, a video signal processing system provided in the embodiments of this application is described. Then, the video signal processing apparatus provided in the embodiments of this application is described. Finally, a specific implementation of the video signal processing method provided in the embodiments of this application is described.

As shown in FIG. 3a, a video signal processing system 100 provided in an embodiment of this application may include a signal source 101 and a video signal processing apparatus 102 that is provided in this embodiment of this application. The signal source 101 is configured to input a to-be-processed video signal to the video signal processing apparatus 102. The video signal processing apparatus 102 is configured to process the to-be-processed video signal according to the video signal processing method provided in the embodiments of this application. In an optional case, the video signal processing apparatus 102 shown in FIG. 3a may have a display function. Then, the video signal processing system 100 provided in this embodiment of this application may further display a video signal on which video signal processing has been performed. In this case, the processed video signal does not need to be output to a display device. In this case, the video signal processing apparatus 102 may be a display device such as a television or a display having a video signal processing function.

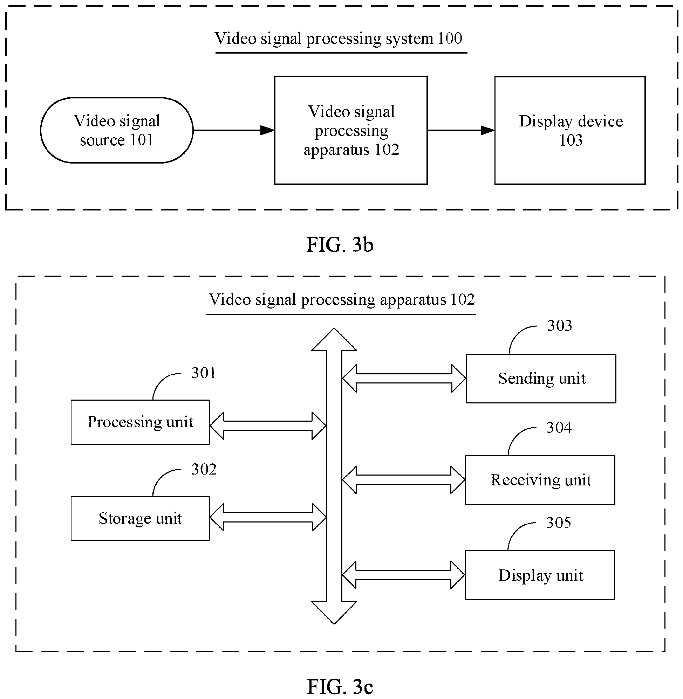

In a structure of another video signal processing system 100 shown in FIG. 3b, the system 100 further includes a display device 103. The display device 103 may be a device having a display function, for example, a television or a display, or may be a screen. The display device 103 is configured to receive a video signal transmitted by the video signal processing apparatus 102 and display the received video signal. The video signal processing apparatus 102 may be a play device such as a set top box.

In the foregoing example video signal processing system 100, if the to-be-processed video signal generated by the video signal source 101 is an HDR signal on which no RGB-space luminance mapping is performed, the signal may be processed by the video signal processing apparatus 102 by using the video signal processing method provided in the embodiments of this application. In this case, the video signal processing apparatus 102 may have an RGB-space luminance mapping function for an HDR signal. If the to-be-processed video signal generated by the video signal source 101 may be a video signal on which RGB-space luminance mapping has been performed, for example, may be a video signal on which the RGB-space luminance mapping has been performed and color space conversion to nonlinear NTFL1 space has been performed in this embodiment of this application, the video signal processing apparatus 102 performs color saturation compensation for the signal. In this embodiment of this application, the video signal may be converted from YUV space to RGB space or from RGB space to YUV space by using a standard conversion process in the prior art.

Specifically, the video signal processing apparatus 102 provided in this embodiment of this application may be in a structure shown in FIG. 3c. It can be learned that the video signal processing apparatus 102 may include a processing unit 301. The processing unit 301 may be configured to implement steps in the video signal processing method provided in the embodiments of this application, for example, determining a saturation adjustment factor corresponding to an initial luminance value of a to-be-processed video signal, and adjusting a chrominance value of the to-be-processed video signal based on the saturation adjustment factor.

For example, the video signal processing apparatus 102 may further include a storage unit 302. The storage unit 302 stores a computer program, an instruction, and data. The storage unit 302 may be coupled to the processing unit 301, and is configured to support the processing unit 301 in invoking the computer program and the instruction in the storage unit 302, to implement the steps in the video signal processing method provided in the embodiments of this application. In addition, the storage unit 302 may be further configured to store data. In the embodiments of this application, coupling is a connection implemented in a particular manner, including a direct connection or an indirect connection implemented by using another device. For example, coupling may be implemented through various interfaces, transmission lines, buses, or the like.

For example, the video signal processing apparatus 102 may further include a sending unit 303 and/or a receiving unit 304. The sending unit 303 may be configured to output the processed video signal. The receiving unit 304 may receive the to-be-processed video signal generated by the video signal source 101. For example, the sending unit 303 and/or the receiving unit 304 may be a video signal interface such as a high definition multimedia interface (high definition multimedia interface, HDMI).

For example, the video signal processing apparatus 102 may further include a display unit 305, for example, a screen, configured to display the processed video signal.

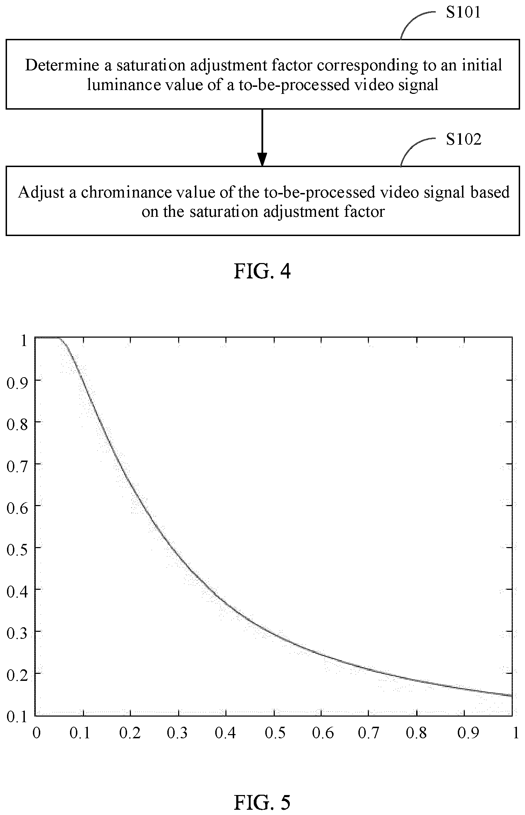

The following describes, with reference to FIG. 4, a video signal processing method provided in an embodiment of this application. The method includes the following steps:

Step S101: Determine a saturation adjustment factor corresponding to an initial luminance value of a to-be-processed video signal. In an optional case, a mapping relationship between the saturation adjustment factor and the initial luminance value is determined by a saturation mapping curve, the saturation mapping curve is determined by a ratio of an adjusted luminance value to the initial luminance value, and the adjusted luminance value is obtained by mapping the initial luminance value based on a preset luminance mapping curve.

Step S102: Adjust a chrominance value of the to-be-processed video signal based on the saturation adjustment factor.

According to the foregoing method, chrominance compensation can be performed for the to-be-processed video signal based on the saturation adjustment factor, and color saturation of a video signal whose chrominance value has been adjusted is improved through chrominance compensation, so that a color that is of the video signal whose chrominance value has been adjusted and that is perceived by human eyes is closer to a color of the video signal obtained before luminance mapping.

If the to-be-processed video signal is a video signal obtained after RGB-space luminance mapping is performed on an HDR signal based on a color saturation adjustment factor s and a formula $C_{out} = ((C_{in}/L_{in} - 1) \times s + 1) \times L_{out}$, or the to-be-processed video signal is an HDR signal on which RGB-space luminance mapping is to be performed based on a color saturation adjustment factor s and a formula $C_{out} = ((C_{in}/L_{in} - 1) \times s + 1) \times L_{out}$ in the foregoing method, a hue shift of an HDR signal caused by RGB-space luminance mapping can be alleviated according to the video signal processing method provided in this embodiment of this application.

Specifically, the to-be-processed video signal in this embodiment of this application may be an HDR signal, or may be a video signal obtained after the luminance mapping and/or space conversion are performed on an HDR signal. The HDR signal herein may be an HDR HLG signal, or the HDR signal may be an HDR PQ signal.

It should be understood that the initial luminance value of the to-be-processed video signal in this embodiment of this application is related to a linear luminance value obtained before the luminance mapping is performed on the to-be-processed video signal. In a feasible implementation, if the saturation mapping curve belongs to target nonlinear space, linear-space-to-target-nonlinear-space conversion may be performed on the linear luminance value obtained before the luminance mapping is performed on the to-be-processed video signal, and an obtained luminance value is used as the initial luminance value of the to-be-processed video signal.

For example, the saturation mapping curve in this embodiment of this application may be a function using the initial luminance value as an independent variable and using the ratio of the adjusted luminance value to the initial luminance value as a dependent variable. For example, the saturation mapping curve may be a curve shown in FIG. 5. A horizontal coordinate of the saturation mapping curve represents the initial luminance value of the to-be-processed video signal, and a vertical coordinate of the saturation mapping curve represents the saturation adjustment factor. For example, the saturation adjustment factor in this embodiment of this application is the ratio of the adjusted luminance value to the initial luminance value. When the saturation adjustment factor corresponding to the initial luminance value is to be determined, the ratio of the adjusted luminance value corresponding to the initial luminance value to the initial luminance value may be used, based on the saturation mapping curve, as the saturation adjustment factor corresponding to the initial luminance value.

In a feasible implementation, the saturation adjustment factor may be determined according to the following formula:

$$f_{sm}NLTF1(eNLTF1) = f_{tm}NLTF1(eNLTF1)/eNLTF1 \ (5),$$

where

eNLTF1 is the initial luminance value of the to-be-processed video signal, $f_{tm}NLTF1()$ represents the luminance mapping curve, $f_{sm}NLTF1()$ represents the saturation mapping curve, correspondingly, $f_{tm}NLTF1(eNLTF1)$ represents the adjusted luminance value corresponding to the initial luminance value, and $f_{sm}NLTF1(eNLTF1)$ represents the saturation adjustment factor corresponding to the initial luminance value.

For example, $f_{tm}NLTF1()$ may be used to represent the luminance mapping curve belonging to nonlinear space NLTF1, $f_{sm}NLTF1()$ represents the saturation mapping curve belonging to the nonlinear space NLTF1, eNLTF1 may be the initial luminance value of the to-be-processed video signal belonging to the nonlinear space NLTF1, $f_{sm}NLTF1(eNLTF1)$ represents the saturation adjustment factor, and the saturation adjustment factor is used to perform luminance adjustment on the to-be-processed video signal that belongs to the nonlinear space NLTF1 and whose initial luminance value is eNLTF1.

During implementation, the initial luminance value of the to-be-processed video signal may be used as an independent variable (namely, an input) of the foregoing formula (5), and a dependent variable (namely, an output of the formula (5)) of the formula (5) is determined as the saturation adjustment factor corresponding to the initial luminance value.

In another feasible implementation, the saturation adjustment factor may be determined by a mapping relationship table, and the mapping relationship table includes a horizontal coordinate value and a vertical coordinate value of at least one sampling point on the saturation mapping curve. Specifically, the saturation adjustment factor may be determined based on a one-dimensional mapping relationship table shown in Table 1. Table 1 is generated based on the saturation mapping curve SM_Curve. A horizontal coordinate and a vertical coordinate that are located on a same line in Table 1 represent a horizontal coordinate value and a vertical coordinate value of one sampling point on the saturation mapping curve SM_Curve.

**Table 1: One-dimensional mapping relationship table generated based on the saturation mapping curve SM_Curve**

| Horizontal coordinate value of a sampling point | Vertical coordinate value of the sampling point |
| --- | --- |
| SM_Curve_$x_1$ | SM_Curve_$y_1$ |
| SM_Curve_$x_2$ | SM_Curve_$y_2$ |
| ... | ... |
| SM_Curve_$x_n$ | SM_Curve_$y_n$ |

As shown in Table 1, SM_Curve_$x_1$, SM_Curve_$x_2$, ..., and SM_Curve_$x_n$ respectively represent horizontal coordinate values of a first sampling point, a second sampling point, ..., and an $n^{th}$ sampling point on the saturation mapping curve, and SM_Curve_$y_1$, SM_Curve_$y_2$, ..., and SM_Curve_$y_n$ respectively represent vertical coordinate values of the first sampling point, the second sampling point, ..., and the $n^{th}$ sampling point on the saturation mapping curve. When the saturation adjustment factor corresponding to the initial luminance value of the to-be-processed video signal is determined based on the mapping relationship table shown in Table 1, the initial luminance value of the to-be-processed video signal may be used as a horizontal coordinate value of a sampling point, and a vertical coordinate value of the sampling point corresponding to the horizontal coordinate value may be used as the determined saturation adjustment factor.

In addition, during implementation, the saturation adjustment factor corresponding to the initial luminance value of the to-be-processed video signal may be alternatively determined by using a linear interpolation method or another interpolation method. For example, the saturation adjustment factor may be determined based on the initial luminance value of the to-be-processed video signal, horizontal coordinate values of p sampling points greater than the initial luminance value, vertical coordinate values of the sampling points corresponding to the horizontal coordinate values of the p sampling points, horizontal coordinate values of q sampling points less than the initial luminance value, and vertical coordinate values of the sampling points corresponding to the horizontal coordinate values of the q sampling points and by using the linear interpolation method, where p and q are positive integers.

For example, there are a plurality of manners of determining the luminance mapping curve in step S101 in this embodiment of this application. The following provides description by using several optional manners as an example.

Manner 1. The luminance mapping curve belonging to the target nonlinear space is determined based on a preset first original luminance mapping curve that is nonlinear.

It should be understood that the first original luminance mapping curve in this embodiment of this application is a characteristic curve used in a process of performing the luminance mapping on a video signal (for example, an HDR signal) in nonlinear space, and is used to represent a correspondence between luminance values that are obtained before and after the luminance mapping is performed on the video signal in the nonlinear space. The first original luminance mapping curve may be generated in the nonlinear space, or may be generated in linear space, and then converted to the nonlinear space.

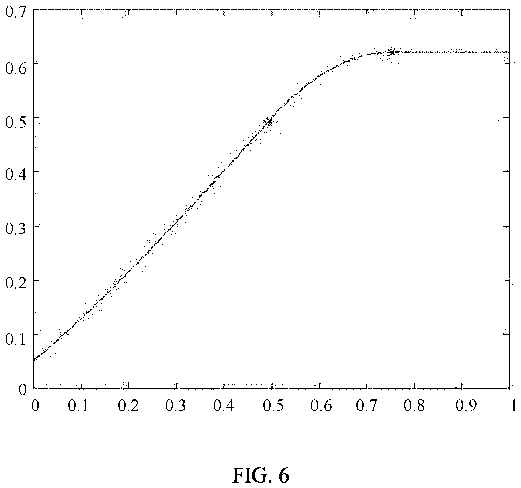

FIG. 6 is a schematic diagram of a first original luminance mapping curve. The curve is generated on an inverse curve PQ EOTF$^{-1}$ of PQ EOTF in the nonlinear space. A horizontal coordinate of the shown first original luminance mapping curve represents a nonlinearly-coded luminance signal of an HDR PQ signal before the luminance mapping, namely, the nonlinearly-coded luminance signal obtained after nonlinear PQ coding is performed on a luminance value of the HDR PQ signal obtained before the luminance mapping. A vertical coordinate of the shown luminance mapping curve represents a nonlinearly-coded luminance signal that corresponds to a luminance value of the HDR PQ signal obtained after the luminance mapping and that is obtained after the nonlinear PQ coding, namely, the nonlinearly-coded luminance signal obtained after the nonlinear PQ coding is performed on the luminance value of the HDR PQ signal obtained after the luminance mapping. A value range of the horizontal coordinate of the first original luminance mapping curve is [0, 1], and a value range of the vertical coordinate is [0, 1].

In the luminance mapping curve determining manner provided in this embodiment of this application, if the saturation mapping curve belongs to the target nonlinear space and the preset first original luminance mapping curve is a nonlinear curve, nonlinear-space-to-linear-space conversion may be performed on a first horizontal coordinate value and a first vertical coordinate value that correspond to at least one sampling point on the first original luminance mapping curve, to obtain a second horizontal coordinate value and a second vertical coordinate value, and then, linear-space-to-target-nonlinear-space conversion is performed on the second horizontal coordinate value and the second vertical coordinate value, to obtain the initial luminance value and the adjusted luminance value that is in a mapping relationship with the initial luminance value, so that the luminance mapping curve can be determined based on the mapping relationship between the initial luminance value and the adjusted luminance value. In this case, the determined luminance mapping curve belongs to the target nonlinear space. The luminance mapping curve may be used to determine the saturation mapping curve belonging to the target nonlinear space.

In addition, in an optional case, the luminance mapping may be alternatively performed on the initial luminance value of the to-be-processed video signal based on the luminance mapping curve, and the adjusted luminance value obtained after the luminance mapping is used as a luminance value of the to-be-processed signal obtained after the luminance mapping. A specific method is: A target first vertical coordinate value corresponding to a target first horizontal coordinate value corresponding to the initial luminance value of the to-be-processed signal may be determined based on the luminance mapping curve, and the target first vertical coordinate value is used as the adjusted luminance value.

Manner 2. The luminance mapping curve belonging to the target nonlinear space is determined based on a preset second original luminance mapping curve that is nonlinear.

It should be understood that the second original luminance mapping curve in this embodiment of this application is a characteristic curve used in a process of performing the luminance mapping on a video signal (for example, an HDR signal) in linear space, and is used to represent a correspondence between luminance values that are obtained before and after the luminance mapping is performed on the video signal in the nonlinear space. The second original luminance mapping curve may be generated in the nonlinear space, and then converted to the linear space, or may be generated in the linear space.

In the luminance mapping curve determining manner provided in this embodiment of this application, if the saturation mapping curve belongs to the target nonlinear space and the preset second original luminance mapping curve is a linear curve, linear-space-to-nonlinear-space conversion may be performed on a third horizontal coordinate value and a third vertical coordinate value that correspond to at least one sampling point on the second original luminance mapping curve, to obtain the initial luminance value and the adjusted luminance value, and then, the luminance mapping curve may be determined based on the mapping relationship between the initial luminance value and the adjusted luminance value, where the luminance mapping curve belongs to the target nonlinear space. During implementation, the luminance mapping curve may be used to determine the saturation mapping curve belonging to the target nonlinear space.

In addition, during implementation, the luminance mapping may be alternatively performed on the initial luminance value of the to-be-processed video signal based on the luminance mapping curve, and the adjusted luminance value obtained after the luminance mapping is used as a luminance value of the to-be-processed signal obtained after the luminance mapping. A specific method is: A target third vertical coordinate value corresponding to a target third horizontal coordinate value corresponding to the initial luminance value of the to-be-processed signal may be determined based on the luminance mapping curve, and the target third vertical coordinate value is used as the adjusted luminance value.

The following describes a saturation mapping curve determining manner provided in this embodiment of this application.

The first original luminance mapping curve TM_Curve belonging to the nonlinear space may be represented as follows by using a set of a horizontal coordinate and a vertical coordinate of a sampling point on the first original luminance mapping curve:

$$\text{TM\_Curve} = \{\text{TM\_Curve\_x}_n, \text{TM\_Curve\_y}_n\} \quad (6),$$

where
$\text{TM\_Curve\_x}_n$ is a first horizontal coordinate value of an $n^{th}$ sampling point on the first original luminance mapping curve, $\text{TM1\_Curve\_y}_n$ is a first vertical coordinate value of the $n^{th}$ sampling point on the first original luminance mapping curve, and n is a positive integer.

Assuming that the first original luminance mapping curve belongs to nonlinear space PQ EOTF$^{-1}$, where the PQ EOTF$^{-1}$ is an inverse curve of the PQ EOTF, a second horizontal coordinate value obtained after nonlinear-space-to-linear-space conversion is performed on the first horizontal coordinate is:

$$\text{TM\_Curve\_L\_x}_n = \text{PQ\_EOTF}(\text{TM\_Curve\_x}_n) \quad (7),$$

where
$\text{PQ\_EOTF}()$ is an expression of the PQ EOTF curve, $\text{TM\_Curve\_L\_x}_n$ represents the second horizontal coordinate value of the $n^{th}$ sampling point, and $\text{TM\_Curve\_x}_n$ represents the first vertical coordinate value of the $n^{th}$ sampling point.

A second vertical coordinate value obtained after nonlinear-space-to-linear-space conversion is performed on the first vertical coordinate is:

$$\text{TM\_Curve\_L\_y}_n = \text{PQ\_EOTF}(\text{TM\_Curve\_y}_n) \quad (8),$$

where
$\text{TM\_Curve\_L\_y}_n$ represents the second vertical coordinate value of the $n^{th}$ sampling point, and $\text{TM\_Curve\_y}_n$ represents the first vertical coordinate value of the $n^{th}$ sampling point.

If the target nonlinear space is nonlinear space NLTF1, where the NLTF1 is a gamma curve, and a gamma coefficient is Gmm = 2.4, a conversion expression used to convert any linear luminance value to the nonlinear space NLTF1 is:

$$\text{NLTF1}(E) = (E/\text{MaxL})^{\wedge}(1/\text{Gmm}) \quad (9),$$

where
in the formula (9), E is a linear luminance value in linear space, and has a luminance range of [0, 10000] nits, MaxL is normalized highest luminance, and in this embodiment, MaxL may be equal to 10000.

The initial luminance value obtained after linear-space-to-target-nonlinear-space conversion is performed on the second horizontal coordinate is:

$$TM\_Curve\_NLTF1\_x_n = NLTF1(TM\_Curve\_L\_x_n) \ (10),$$

where
TM_Curve_NLTF1_$x_n$ is the initial luminance value, NLTF1(TM_Curve_L_$x_n$) represents a luminance value obtained after the linear luminance value TM_Curve_L_$x_n$ is converted to the nonlinear space NLTF1, and TM_Curve_L_$x_n$ is the second horizontal coordinate.

The adjusted luminance value obtained after linear-space-to-target-nonlinear-space conversion is performed on the second vertical coordinate is:

$$TM\_Curve\_NLTF1\_y_n = NLTF1(TM\_Curve\_L\_y_n) \ (11),$$

where
TM_Curve_NLTF1_$y_n$ is the adjusted luminance value, NLTF1(TM_Curve_L_$y_n$) represents a luminance value obtained after the linear luminance value TM_Curve_L_$y_n$ is converted to the nonlinear space NLTF1, and TM_Curve_L_$y_n$ is the second vertical coordinate.

It should be noted that there is a mapping relationship between an initial luminance value determined based on any sampling point on the first original luminance mapping curve and an adjusted luminance value determined based on the sampling point, so that a sampling point whose horizontal coordinate value is an initial luminance value and whose vertical coordinate value is an adjusted luminance value corresponding to the initial luminance value is selected, and a curve is constructed based on the sampling point to obtain the luminance mapping curve.

The luminance mapping curve TM_Curve_NLTF1 is represented by using a horizontal coordinate value and a vertical coordinate value of a sampling point on the curve:

$$TM\_Curve\_NLTF1 = \{TM\_Curve\_NLTF1\_x_n, TM\_Curve\_NLTF1\_y_n\} \ (12),$$

where
TM_Curve_NLTF1_$x_n$ represents the initial luminance value, TM_Curve_NLTF1_$y_n$ represents the adjusted luminance value corresponding to the initial luminance value, and n is a positive integer.

It should be noted that the luminance mapping curve TM_Curve_NLTF1 determined according to the foregoing method belongs to the nonlinear space NLTF1.

An expression of a saturation mapping curve SM_Curve belonging to the nonlinear space NLTF1 may be determined based on the luminance mapping curve TM_Curve_NLTF1 in the formula (12) and by using the following method:

The saturation mapping curve SM_Curve may be represented as:

$$SM\_Curve = \{SM\_Curve\_NLTF1\_x_n, SM\_Curve\_NLTF1\_y_n\} \ (13),$$

where

$$SM\_Curve\_NLTF1\_x_n = TM\_Curve\_NLTF1\_x_n \ (14);$$

and

$$SM\_Curve\_NLTF1\_y_n = TM\_Curve\_NLTF1\_y_n / TM\_Curve\_NLTF1\_x_n \ (15).$$

In the foregoing formula (13) to formula (15), SM_Curve_NLTF1_$x_n$ is a horizontal coordinate of an $n$th sampling point on the saturation mapping curve, and TM_Curve_NLTF1_$x_n$ is a horizontal coordinate of an $n$th sampling point on the luminance mapping curve TM_Curve_NLTF1.

SM_Curve_NLTF1_$y_n$ is a vertical coordinate of the $n$th sampling point on the saturation mapping curve, and TM_Curve_NLTF1_$y_n$ is a vertical coordinate of the $n$th sampling point on the luminance mapping curve TM_Curve_NLTF1.

The following is another saturation mapping curve determining method provided in this application.

An expression of the first original luminance mapping curve TM_Curve that is nonlinear is:

$$\text{ftm(e)} = \begin{cases} e, & e \leq 0.2643 \\ \text{hmt(e)}, & 0.2643 < e \leq 0.7518 \\ 0.5079133, & e > 0.7518 \end{cases} (16),$$

where

e represents an input of the first original luminance mapping curve, namely, a first horizontal coordinate value of a sampling point on the first original luminance mapping curve, and ftm(e) represents a first vertical coordinate value of the sampling point.

The function hmt() is defined as follows:

$$hmt(x) = 0.2643 \times \alpha_0(x) + 0.5081 \times \alpha_1(x) + \beta_0(x) \ (17),$$

where

$$\begin{cases} \alpha_0(x) = \frac{(-0.0411 + 2x)(0.7518-x)^2}{0.1159} \\ \alpha_1(x) = \frac{(1.9911-2x)(x-0.2643)^2}{0.1159} \\ \beta_0(x) = \frac{(x-0.2643)(x-0.7518)^2}{0.2377} \end{cases} .$$

The first horizontal coordinate value e of the sampling point is converted to the linear space, so that a second horizontal coordinate value of the sampling point in the linear space may be represented by using eL.

A second vertical coordinate value $f_{tmL}$(eL) obtained after the first vertical coordinate value ftm(e) is converted to the linear space may be represented by using the following formula:

$$f_{tmL}(eL) = PQ\_EOTF(f_{tm}(e)) = PQ\_EOTF(f_{tm}(PQ\_EOTF^{-1}(eL))) \ (18),$$

where
PQ_EOTF() is an expression of the PQ EOTF curve.

If the target nonlinear space is the nonlinear space NLTF1, where the NLTF1 is a gamma curve and a gamma coefficient is Gmm = 2.4, the initial luminance value obtained after linear-space-to-target-nonlinear-space conversion is performed on the second horizontal coordinate value eL may be represented as eNLTF1. For a conversion expression used to convert any linear luminance value to the nonlinear space NLTF1, refer to the foregoing formula (9).

The adjusted luminance value $f_{tmNLTF1}$(eNLTF1) obtained after linear-space-to-target-nonlinear-space conversion is performed on the second vertical coordinate value $f_{tmL}$(eL) may be represented as:

$$f_{tmNLTF1}(eNLTF1) = NLTF1(f_{tmL}(eL)) = NLTF1(PQ\_EOTF(f_{tm}(PQ\_EOTF^{-1}(eL)))) =$$

$$NLTF1(PQ\_EOTF(f_{tm}(PQ\_EOTF^{-1}(NLTF1^{-1}(eNLTF1))))) \ (19),$$

where
NLTF1() represents a conversion expression used to convert any linear luminance value to the nonlinear space NLTF1, and NLTF1$^{-1}$() represents an inverse expression of NLTF1().

Therefore, the luminance mapping curve TM_Curve_NLTF1 may be represented according to the foregoing formula (19). The luminance mapping curve TM_Curve_NLTF1 belongs to the nonlinear space NLTF1.

The saturation mapping curve is determined based on the luminance mapping curve TM_Curve_NLTF1. Then, the saturation mapping curve SM Curve may be represented by using the following formula:

$$f_{smNLTF1}(eNLTF1) = f_{tmNLTF1}(eNLTF1)/eNLTF1 \ (20),$$

where
eNLTF1 represents the initial luminance value, and $f_{smNLTF1}(eNLTF1)$ represents the saturation adjustment factor corresponding to the initial luminance value eNLTF1.

The following is another saturation mapping curve determining method provided in this application. The second original luminance mapping curve TM_Curve belonging to the linear space is represented as follows by using a set of a horizontal coordinate and a vertical coordinate of a sampling point on the first original luminance mapping curve:

$$TM\_Curve = \{TM\_Curve\_x_n, TM\_Curve\_y_n\} \ (21),$$

where
$TM\_Curve\_x_n$ is a third horizontal coordinate value of an $n^{th}$ sampling point on the second original luminance mapping curve, $TM1\_Curve\_y_n$ is a third vertical coordinate value of the $n^{th}$ sampling point on the second original luminance mapping curve, and n is a positive integer.

If the target nonlinear space is the nonlinear space NLTF1, where the NLTF1 is a gamma curve and a gamma coefficient is Gmm = 2.4, for a conversion expression used to convert any linear luminance value to the nonlinear space NLTF1, refer to formula (9).

The initial luminance value obtained after linear-space-to-target-nonlinear-space conversion is performed on the third horizontal coordinate is:

$$TM\_Curve\_NLTF1\_x_n = NLTF1(TM\_Curve\_x_n) \ (22),$$

where
$TM\_Curve\_NLTF1\_x_n$ is the initial luminance value, $NLTF1(TM\_Curve\_x_n)$ represents a luminance value obtained after the third horizontal coordinate value $TM\_Curve\_x_n$ is converted to the nonlinear space NLTF1.

The adjusted luminance value obtained after linear-space-to-target-nonlinear-space conversion is performed on the third vertical coordinate is:

$$TM\_Curve\_NLTF1\_y_n = NLTF1(TM\_Curve\_L\_y_n) \ (23),$$

where
$TM\_Curve\_NLTF1\_y_n$ is the adjusted luminance value, and $NLTF1(TM\_Curve\_y_n)$ represents a luminance value obtained after the third vertical coordinate $TM\_Curve\_y_n$ is converted to the nonlinear space NLTF1.

It should be noted that there is a mapping relationship between an initial luminance value determined based on any sampling point on the second original luminance mapping curve and an adjusted luminance value determined based on the sampling point, so that a sampling point whose horizontal coordinate value is an initial luminance value and whose vertical coordinate value is an adjusted luminance value corresponding to the initial luminance value is selected, and a curve is constructed based on the sampling point to obtain the luminance mapping curve.

The luminance mapping curve TM_Curve_NLTF1 is represented by using a horizontal coordinate value and a vertical coordinate value of a sampling point on the curve:

$$TM\_Curve\_NLTF1 = \{TM\_Curve\_NLTF1\_x_n, TM\_Curve\_NLTF1\_y_n\} \ (24),$$

where
$TM\_Curve\_NLTF1\_x_n$ represents the initial luminance value, $TM\_Curve\_NLTF1\_y_n$ represents the adjusted luminance value corresponding to the initial luminance value, and n is a positive integer.

It should be noted that the luminance mapping curve TM_Curve_NLTF1 determined according to the foregoing method belongs to the nonlinear space NLTF1.

An expression of the saturation mapping curve SM_Curve belonging to the nonlinear space NLTF1 may be determined based on the luminance mapping curve TM_Curve_NLTF1 in the formula (24) and by using the following method:

The saturation mapping curve SM_Curve may be represented as:

$$SM\_Curve = \{SM\_Curve\_NLTF1\_x_n, SM\_Curve\_NLTF1\_y_n\} \ (25),$$

where

$$SM\_Curve\_NLTF1\_x_n = TM\_Curve\_NLTF1\_x_n \ (26);$$

and

$$SM\_Curve\_NLTF1\_y_n = TM\_Curve\_NLTF1\_y_n/TM\_Curve\_NLTF1\_x_n \ (27).$$

In the foregoing formula (25) to formula (27), $SM\_Curve\_NLTF1\_x_n$ is a horizontal coordinate of an $n^{th}$ sampling point on the saturation mapping curve, and $TM\_Curve\_NLTF1\_x_n$ is a horizontal coordinate of an $n^{th}$ sampling point on the luminance mapping curve TM_Curve_NLTF1.

$SM\_Curve\_NLTF1\_y_n$ is a vertical coordinate of the $n^{th}$ sampling point on the saturation mapping curve, and $TM\_Curve\_NLTF1\_y_n$ is a vertical coordinate of the $n^{th}$ sampling point on the luminance mapping curve TM_Curve_NLTF1.

The following describes another video signal processing method provided in this application.

If it is known that a third horizontal coordinate of any sampling point on the second original luminance mapping curve is e, and a third vertical coordinate of the sampling point on the second original luminance mapping curve is $f_{tm}(e)$, the second original luminance mapping curve is a luminance mapping curve generated in the linear space.

If the target nonlinear space is the nonlinear space NLTF1, where the NLTF1 is a gamma curve and a gamma coefficient is Gmm = 2.4, for a conversion expression used to convert any linear luminance value to nonlinear space NLTF1, refer to the foregoing formula (9).

Then, the initial luminance value obtained after linear-space-to-target-nonlinear-space conversion is performed on the third horizontal coordinate value e may be represented as eNLTF1.

The adjusted luminance value $f_{tmNLTF1}(eNLTF1)$ obtained after linear-space-to-target-nonlinear-space conversion is performed on the third vertical coordinate value $f_{tm}(e)$ may be represented as:

$$f_{tmNLTF1}(eNLTF1) = NLTF1(f_{tm}(e)) \ (28),$$

where
NLTF1() represents a conversion expression used to convert any linear luminance value to the nonlinear space NLTF1.

Therefore, the luminance mapping curve TM_Curve_NLTF1 may be represented according to the foregoing formula (28). The luminance mapping curve TM_Curve_NLTF1 belongs to the nonlinear space NLTF1.

The saturation mapping curve is determined based on the luminance mapping curve TM_Curve_NLTF1. Then, the saturation mapping curve SM Curve may be represented by using the following formula:

$$f_{smNLTF1}(eNLTF1) = f_{tmNLTF1}(eNLTF1)/eNLTF1 \ (29),$$

where
eNLTF1 represents the initial luminance value, and $f_{smNLTF1}(eNLTF1)$ represents the saturation adjustment factor corresponding to the initial luminance value eNLTF1.

During implementation of step S102, after the saturation adjustment factor is determined, the chrominance value of the to-be-processed video signal may be adjusted based on a product of a preset chrominance component gain coefficient and the saturation adjustment factor. Specifically, a mapping relationship between a chrominance signal in the to-be-processed video signal and a chrominance component gain coefficient may be predetermined. When the to-be-processed video signal is adjusted by using the video signal processing method provided in this embodiment of this application, the chrominance signal in the to-be-processed video signal is adjusted based on a product of the chrominance component gain coefficient corresponding to the chrominance signal in the to-be-processed video signal and the saturation adjustment factor.

During specific implementation, if the to-be-processed video signal includes at least two chrominance signals, a chrominance value of each chrominance signal may be adjusted based on a product of a chrominance component gain coefficient corresponding to the chrominance signal and the saturation adjustment factor. Specifically, if the to-be-processed video signal is a YCC signal, the YCC signal includes a first chrominance signal and a second chrominance signal. In addition, the preset chrominance component gain coefficient includes a preset first chrominance component gain coefficient and a preset second chrominance component gain coefficient. The first chrominance signal corresponds to a first chrominance value, and the second chrominance signal corresponds to a second chrominance value. When a chrominance value of the YCC signal is adjusted, the first chrominance value corresponding to the first chrominance signal may be adjusted based on a product of the first chrominance component gain coefficient and the saturation adjustment factor, and the second chrominance value corresponding to the second chrominance signal may be adjusted based on a product of the preset second chrominance component gain coefficient and the saturation adjustment factor.

For example, if the to-be-processed video signal is a YUV signal YUV0, where a saturation adjustment factor determined based on an initial luminance value of YUV0 is SMCoef, a first chrominance component gain coefficient corresponding to a first chrominance component U of YUV0 is Ka, a second chrominance component gain coefficient corresponding to a second chrominance component V of YUV0 is Kb, a luminance component value of YUV0 is Y0, a chrominance value of the first chrominance component U is U0, and a chrominance value of the second chrominance component V is V0, a process of adjusting a chrominance value of the YUV signal may be as follows:

A product of the first chrominance component gain coefficient Ka and SMCoef is used as a first chrominance component adjustment factor SMCoefa, and a product of the second chrominance component gain coefficient Kb and SMCoef is used as a second chrominance component adjustment factor SMCoefb. Therefore,

$$\mathrm{SMCoefa = SMCoef \times Ka} \ (30);$$

and

$$\mathrm{SMCoefb = SMCoef \times Kb} \ (31).$$

Then, a product U0' of the first chrominance component adjustment factor SMCoefa and U0 may be used as an adjusted chrominance value of the first chrominance component, and a product V0' of the second chrominance component adjustment factor SMCoefb and V0 may be used as an adjusted chrominance value of the second chrominance component.

The following describes a process of processing a signal $Y_sCb_sCr_s$ in this embodiment of this application. $Y_sCb_sCr_s$ is a 4:4:4 nonlinear video signal YCbCr restored by a terminal through 2nd audio video coding standard (2nd audio video coding standard, AVS2) decoding and reconstruction and chrominance upsampling. Each component of $Y_sCb_sCr_s$ is a 10-bit digital code value.

(1) A nonlinear signal $R'_sG'_sB'_s$ is calculated based on the signal $Y_sCb_sCr_s$:

$$\begin{pmatrix} Y_{sf} \\ Cb_{sf} \\ Cr_{sf} \end{pmatrix} = \begin{pmatrix} \frac{1}{876} & 0 & 0 \\ 0 & \frac{1}{896} & 0 \\ 0 & 0 & \frac{1}{896} \end{pmatrix} \times \begin{pmatrix} Y_s & - & 64 \\ Cb_s & -512 \\ Cr_s & - & 512 \end{pmatrix} (32);$$

and

$$\begin{pmatrix} R'_s \\ G'_s \\ B'_s \end{pmatrix} = \begin{pmatrix} 1 & 0 & 1.4746 \\ 1 & -0.1645 & -0.5713 \\ 1 & 1.8814 & 0 \end{pmatrix} \times \begin{pmatrix} Y_{sf} \\ Cb_{sf} \\ Cr_{sf} \end{pmatrix} (33),$$

where

the signal $Y_sCb_sCr_s$ is a 10-bit digital code value with a limited range, $R'_sG'_sB'_s$ obtained after processing is a floating-point nonlinear color value, and a value range of each component of $R'_sG'_sB'_s$ is adjusted to an interval [0, 1].

(1) A linear signal $R_sG_sB_s$ is calculated based on the signal $R'_sG'_sB'_s$, and linear luminance $Y_s$ of the input signal $R_sG_sB_s$ is calculated:

$$E_s = HLG\_OETF^{-1}(E'_s) \quad (34),$$

where
in the equation, $E_s$ represents any component of the signal $R_sG_sB_s$, and has a value range [0, 1], $E'_s$ represents any component of the signal $R'_sG'_sB'_s$, and the function $HLG\_OETF^{-1}()$ is defined as follows based on ITU BT.2100:

$$HLG\_OETF^{-1}(E') = \begin{cases} \dfrac{E'^2}{3} & 0 \le E' \le {}^1/_2 \\ \dfrac{\left(exp\left(\frac{(E' - c)}{a}\right) + b\right)}{12} & {}^1/_2 < E' \le 1 \end{cases} \quad (35),$$

where
$a = 0.17883277$, $b = 1 - 4a$, and $c = 0.5 - a \times \ln(4a)$.
The linear luminance $Y_s$ of $R_sG_sB_s$ is calculated as follows:

$$Y_s = 0.2627R_s + 0.6780G_s + 0.0593B_s \quad (36),$$

where
in the formula, $Y_s$ is a real number, and a value thereof is in the interval [0, 1].
(2) A $Y_t$ signal is calculated based on the linear luminance $Y_s$.
Display luminance $Y_d$ is calculated based on the linear luminance $Y_s$:

$$Y_d = 1000(Y_s)^{1.2} \quad (37).$$

Visual linear luminance $Y_{dPQ}$ is calculated based on the $Y_t$ signal:

$$Y_{dPQ} = PQ\_EOTF^{-1}(Y_d) \quad (38),$$

where

$$PQ\_EOTF^{-1}(E) = \left(\frac{c_1 + c_2(E/10000)^{m_1}}{1 + c_3(E/10000)^{m_1}}\right)^{m_2};$$

$m_1 = 2610/16384 = 0.1593017578125$;
$m_2 = 2523/4096 \times 128 = 78.84375$;
$c_1 = 3424/4096 = 0.8359375 = c_3 - c_2 + 1$;
$c_2 = 2413/4096 \times 32 = 18.8515625$; and
$c_3 = 2392/4096 \times 32 = 18.6875$.

Luminance mapping is performed on $Y_{dPQ}$, to obtain $Y_{tPQ}$:

$$Y_{tPQ} = f_{tm}(Y_{dPQ}) \quad (39);$$

The function $f_{tm}()$ in the equation is defined as follows:

$$f_{tm}(e) = \begin{cases} e, & \text{when } e \leq 0.2643 \\ hmt(e), & \text{when } 0.2643 < e \leq 0.7518 \\ 0.5079133, & \text{when } e > 0.7518 \end{cases} \quad (40).$$

The function hmt() is defined as follows:

$$hmt(x) = 0.2643 \times \alpha_0(x) + 0.5081 \times \alpha_1(x) + \beta_0(x) \quad (41);$$

and

$$\begin{cases} \alpha_0(x) = \frac{(-0.0411 + 2x)(0.7518 - x)^2}{0.1159} \\ \alpha_1(x) = \frac{(1.9911 - 2x)(x - 0.2643)^2}{0.1159} \\ \beta_0(x) = \frac{(x - 0.2643)(x - 0.7518)^2}{0.2377} \end{cases} \quad (42).$$

Linear luminance $Y_t$ obtained after normalized luminance mapping is calculated based on the visual linear luminance $Y_{dPQ}$:

$$Y_t = PQ\_EOTF(Y_{tPQ}) \quad (43),$$

where

$$PQ\_EOTF(E') = 10000 \left( \frac{max[(E'^{1/m_2} - c_1), 0]}{c_2 - c_3 E'^{1/m_2}} \right)^{1/m_1}.$$

Therefore, a formula of calculating $Y_t$ is:

$$Y_t = PQ\_EOTF(f_{tm}(PQ\_EOTF^{-1}(1000(Y_s)^{1.2}))) \quad (44),$$

where
in the formula, $Y_t$ is a real number, and a value thereof is in an interval [0, 100].
(3) A luminance mapping gain TmGain is calculated based on $Y_t$ and $Y_s$.
Calculation of the luminance mapping gain TmGain is shown in the formula:

$$TmGain = \begin{cases} \frac{Y_t}{Y_s}, & Y_s \neq 0 \\ 0, & Y_s = 0 \end{cases} \quad (45).$$

(4) A saturation mapping gain SmGain is calculated based on the luminance mapping gain TmGain.

a. A nonlinear display luminance value before the luminance mapping is calculated:

$$Y_{dGMM} = (Y_d/1000)^{1/\gamma} = (1000(Y_s)^{1.2}/1000)^{1/\gamma} \quad (46).$$

b. A nonlinear display luminance value after the luminance mapping is calculated:

$$Y_{tGMM} = (Y_t/1000)^{1/\gamma} \quad (47).$$

c. The saturation mapping gain SmGain is calculated:

$$SmGain = \frac{Y_{tGMM}}{Y_{dGMM}} = \left(\frac{Y_t}{1000(Y_s^{1.2})}\right)^{1/\gamma} \quad (48).$$

(5) A signal $R_{tm}G_{tm}B_{tm}$ is calculated:

$$E_{tm} = E_s \times TmGain \quad (49),$$

where
in the formula, $E_s$ represents any component of the signal $R_sG_sB_s$, and Etm represents any component of the signal $R_{tm}G_{tm}B_{tm}$.
(6) A signal $R_tG_tB_t$ is calculated (color gamut mapping is performed):

$$\begin{pmatrix} R_t \\ G_t \\ B_t \end{pmatrix} = \begin{pmatrix} 1.6605 & -0.5876 & -0.0728 \\ -0.1246 & 1.1329 & -0.0083 \\ -0.0182 & -0.1006 & 1.1187 \end{pmatrix} \times \begin{pmatrix} R_{tm} \\ G_{tm} \\ B_{tm} \end{pmatrix} \quad (50).$$

(7) A signal $R'_tG'_tB'_t$ is calculated based on the signal $R_tG_tB_t$:

$$E`_t = (E_t/100)^{1/\gamma} \quad (51).$$

(8) A signal $Y_tCb_tCr_t$ is calculated based on the signal $R'_tG'_tB'_t$:

$$\begin{pmatrix} Y_{tf} \\ Cb_{tf} \\ Cr_{tf} \end{pmatrix} = \begin{pmatrix} 0.2126 & 0.7152 & 0.0722 \\ -0.1146 & -0.3854 & 0.5 \\ 0.5 & -0.4542 & -0.0458 \end{pmatrix} \times \begin{pmatrix} R`_t \\ G`_t \\ B`_t \end{pmatrix} \quad (52);$$

and

$$\begin{pmatrix} Y_t \\ Cb_t \\ Cr_t \end{pmatrix} = \begin{pmatrix} 876 & 0 & 0 \\ 0 & 896 & 0 \\ 0 & 0 & 896 \end{pmatrix} \times \begin{pmatrix} Y_{tf} \\ Cb_{tf} \\ Cr_{tf} \end{pmatrix} + \begin{pmatrix} 64 \\ 512 \\ 512 \end{pmatrix} \quad (53).$$

$R'_tG'_tB'_t$ is a nonlinear color value, and the value is in the interval [0, 1]. The $Y_tCb_tCr_t$ signal obtained after processing is a 10-bit digital code value with a limited range. For example, $\gamma$ in this embodiment may be 2.2, 2.4, or another value. The value of $\gamma$ may be selected based on an actual status, and this is not limited in this embodiment of this application.
(9) A signal $Y_oCb_oCr_o$ is calculated (saturation mapping):

$$\begin{pmatrix} Y_o \\ Cb_o \\ Cr_o \end{pmatrix} = \begin{pmatrix} 1 & 0 & 0 \\ 0 & SmGain & 0 \\ 0 & 0 & SmGain \end{pmatrix} \times \begin{pmatrix} Y_t - 64 \\ Cb_t - 512 \\ Cr_t - 512 \end{pmatrix} + \begin{pmatrix} 64 \\ 512 \\ 512 \end{pmatrix} \quad (54),$$

where
the signal $Y_oCb_oCr_o$ is a video signal whose chrominance value has been adjusted according to the video signal processing method provided in this embodiment of this application, and the signal $Y_oCb_oCr_o$ is a 10-bit digital code value with a limited range.

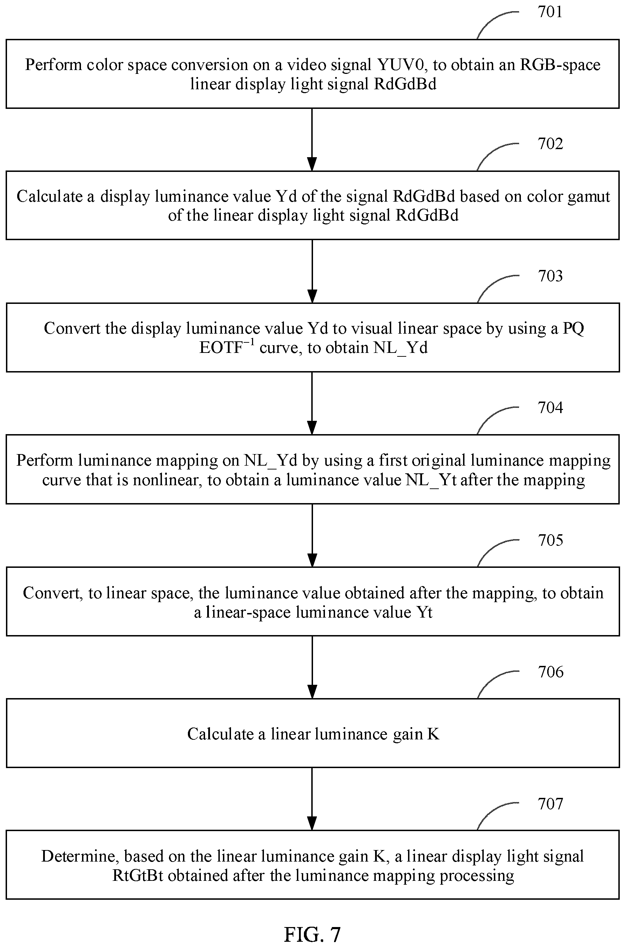

For example, during implementation of the video signal processing method provided in this embodiment of this application, RGB-space luminance mapping may be alternatively performed on a video signal YUVO according to a method shown in FIG. 7.

Step 701: Perform color space conversion on the video signal YUV0, to obtain an RGB-space linear display light signal RdGdBd, where Rd, Gd, and Bd represent luminance values of three components of the linear display light signal RdGdBd, and value ranges of Rd, Gd, and Bd are [0, 10000].

Step 702: Calculate a display luminance value Yd of the signal RdGdBd based on color gamut of the linear display light signal RdGdBd, where Yd = (cr x Rd + cg x Gd + cb x Bd). When the color gamut of the signal RdGdBd is BT.2020, a parameter cr may be 0.2627, cg may be 0.6780, and cb may be 0.0593, or when the color gamut of the signal RdGdBd is other color gamut, cr, cg, and cb may be linear luminance calculation parameters in respective color gamut.

Step 703: Convert the display luminance value Yd to visual linear space by using a PQ EOTF$^{-1}$ curve, to obtain NL_Yd, where NL_Yd = PQ_EOTF$^{-1}$(Yd), and PQ_EOTF$^{-1}$() is an expression of an inverse curve of PQ_EOTF.

Step 704: Perform luminance mapping on NL_Yd by using a first original luminance mapping curve that is nonlinear, to obtain a luminance value NL_Yt after the mapping, where the first original luminance mapping curve is generated in PQ_EOTF$^{-1}$ space.

Step 705: Convert, to linear space, the luminance value obtained after the mapping, to obtain a linear-space luminance value Yt, where Yt = PQ_EOTF(NL_Yt).

Step 706: Calculate a linear luminance gain K, where K is a ratio of the linear-space luminance value Yt to the display luminance value Yd.

Step 707: Determine, based on K and the linear display light signal RdGdBd, a linear display light signal RtGtBt obtained after the luminance mapping processing, where (Rt, Gt, Bt) = K x (Rd, Gd, Bd) + (BLoffset, BLoffset, BLoffset), BLoffset is a black level of a display device, namely, a minimum value of display luminance, and Rd, Gd, and Bd are three components of the linear display light signal RdGdBd.

During implementation of step 704, if a horizontal coordinate and a vertical coordinate of a sampling point on the first original luminance mapping curve are represented by using a mapping relationship table shown in Table 2, NL_Yt may be calculated based on NL_Yd though table lookup and by using a linear interpolation method, or NL_Yt may be calculated by using another interpolation method. Horizontal coordinate values $x_0$, $x_1$, ..., and $x_n$ of sampling points shown in Table 2 are horizontal coordinate values of a plurality of sampling points on the first original luminance mapping curve, and vertical coordinate values $y_0$, $y_1$, ..., and $y_n$ of the sampling points are vertical coordinate values of the plurality of sampling points on the first original luminance mapping curve.

**Table 2: One-dimensional mapping relationship table generated based on the first original luminance mapping curve**

| Horizontal coordinate value of a sampling point | Vertical coordinate value of the sampling point |
| --- | --- |
| $x_0$ | $y_0$ |
| $x_1$ | $y_1$ |
| ... | ... |
| $x_n$ | $y_n$ |

For example, NL_Yt corresponding to NL_Yd may be determined by using the following linear interpolation method.

If it is determined, through table lookup, that $x_0$ < NL_Yd < $x_1$, NL_Yt is determined based on a horizontal coordinate value $x_0$ and a vertical coordinate value yo of a sampling point (xo, yo) and a horizontal coordinate value $x_1$ and a vertical coordinate value $y_1$ of a sampling point ($x_1$, $y_1$) in Table 2.

A vertical coordinate value y corresponding to any horizontal coordinate value x between $x_0$ and $x_1$ on the first original luminance mapping curve may be represented as follows by using the linear interpolation method:

$$y = y0 + \frac{y1 - y0}{x1 - x0}(x - x0) \quad (55),$$

where
x in the formula is set to NL_Yd, and obtained y is NL Yt corresponding to NL_Yd.

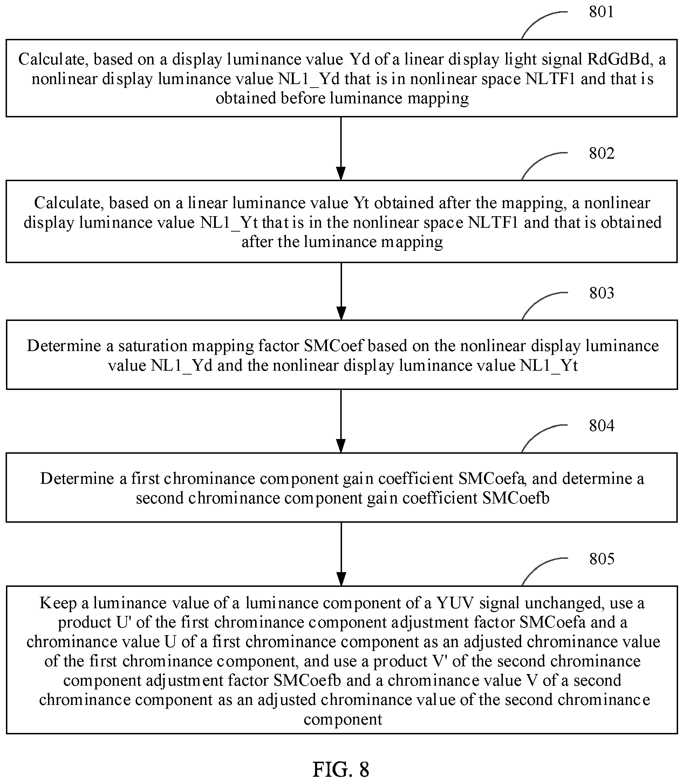

If the to-be-processed video signal is a YUV signal on which luminance mapping has been performed according to the method shown in FIG. 7 and that is converted to the nonlinear space NLTF1, and if the display luminance value Yd of the linear display light signal RdGdBd is known based on step 702, and the linear-space luminance value Yt of luminance obtained after the mapping is known based on step 705, a saturation adjustment factor may be determined based on Yd and Yt, and chrominance adjustment may be performed on the to-be-processed video signal. A specific method is shown in FIG. 8.

Step 801: Calculate, based on the display luminance value Yd of the linear display light signal RdGdBd, a nonlinear display luminance value NL1_Yd that is in the nonlinear space NLTF1 and that is obtained before luminance mapping, where NL1_Yd = NLTF1(Yd), and NLTF1() represents a conversion expression used for conversion to the nonlinear space NLTF1. For the expression, refer to the foregoing formula (9).

Step 802: Calculate, based on the linear luminance value Yt obtained after the mapping, a nonlinear display luminance value NL1_Yt that is in the nonlinear space NLTF1 and that is obtained after the luminance mapping, where NL1_Yt = NLTF1(Yt).

Step 803: Determine a saturation mapping factor SMCoef based on the nonlinear display luminance value NL1_Yd and the nonlinear display luminance value NL1_Yt, where SMCoef = NL1_Yt/NL1_Yd.

Step 804: Determine a product of a first chrominance component gain coefficient Ka corresponding to a first chrominance component U of a YUV signal and SMCoef as a first chrominance component gain coefficient SMCoefa, and determine a product of a second chrominance component gain coefficient Kb corresponding to a second chrominance component V of the YUV signal and SMCoef as a second chrominance component gain coefficient SMCoefb.

Step 805: Keep a luminance value of a luminance component of the YUV signal unchanged, use a product U' of the first chrominance component adjustment factor SMCoefa and a chrominance value U of the first chrominance component as an adjusted chrominance value of the first chrominance component, use a product V' of the second chrominance component adjustment factor SMCoefb and a chrominance value of the second chrominance component V as an adjusted chrominance value of the second chrominance component, and then end the process.

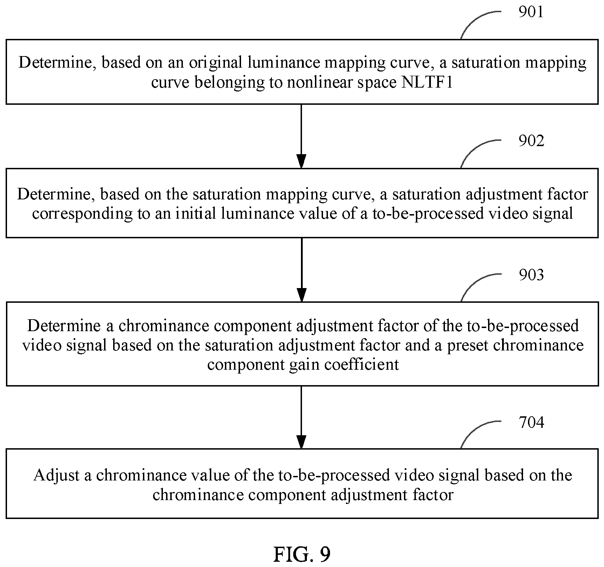

As shown in FIG. 9, if the to-be-processed video signal is a YUV signal on which RGB-space luminance mapping has been performed by using an original luminance mapping curve and that is converted to nonlinear space NLTF1, a video signal processing method provided in an embodiment of this application includes the following steps:

Step 901: Determine, based on the original luminance mapping curve, a saturation mapping curve belonging to the nonlinear space NLTF1. The original luminance mapping curve herein may be the first original luminance mapping curve that is nonlinear in the embodiments of this application, or may be the second original luminance mapping curve that is linear in the embodiments of this application. For implementation of step 901, refer to implementation of Embodiment 1 to Embodiment 4 of this application.

Step 902: Determine, based on the saturation mapping curve, a saturation adjustment factor corresponding to an initial luminance value of the to-be-processed video signal, where if the saturation mapping curve is represented by using a mapping relationship table, the saturation adjustment factor corresponding to the initial luminance value may be determined based on a horizontal coordinate value and a vertical coordinate value of a sampling point in the mapping relationship table by using a linear interpolation method, or if the saturation mapping curve is represented by using a curve expression, the initial luminance value of the to-be-processed video signal may be used as an input of the expression, and an output of the expression may be used as the saturation adjustment factor corresponding to the initial luminance value.

Step 903: Determine a chrominance component adjustment factor of the to-be-processed video signal based on the saturation adjustment factor and a preset chrominance component gain coefficient.

Step 904: Adjust a chrominance value of the to-be-processed video signal based on the chrominance component adjustment factor, and then end the process.

According to the foregoing method, the saturation mapping curve belonging to the nonlinear space NLTF1 can be determined based on the original luminance mapping curve used to perform the RGB-space luminance mapping on the video signal, and the saturation adjustment factor of the video signal on which the luminance mapping has been performed and that is then converted to the nonlinear space NLTF1 is determined based on the saturation mapping curve, to implement chrominance adjustment on the video signal, so that a color that is of the video signal whose chrominance value has been adjusted and that is perceived by human eyes is closer to a color of the video signal obtained before the luminance mapping. During implementation, the to-be-processed video signal in the method shown in FIG. 9 may be a video signal on which RGB-space luminance mapping has been performed by using the luminance mapping method shown in FIG. 7, or may be a video signal on which RGB-space luminance mapping has been performed by using another method.

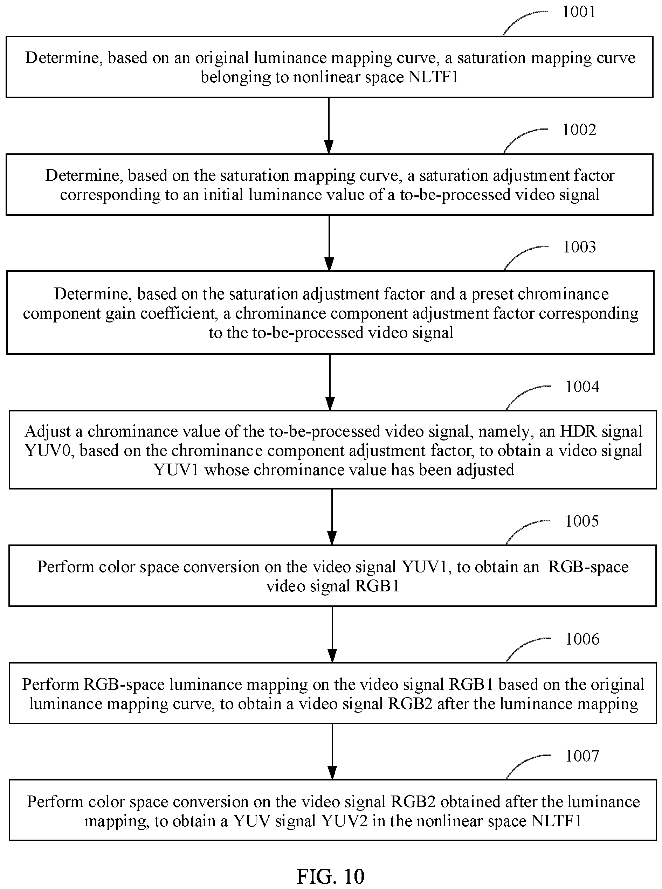

As shown in FIG. 10, if the to-be-processed video signal is an HDR signal YUVO, the RGB-space luminance mapping needs to be performed on the HDR signal by using an original luminance mapping curve, and the HDR signal needs to be converted into a YUV signal in the nonlinear space NLTF1 after the luminance mapping. A video signal processing method provided in an embodiment of this application includes the following steps:

Step 1001: Determine, based on the original luminance mapping curve, a saturation mapping curve belonging to the nonlinear space NLTF1. The original luminance mapping curve herein may be the first original luminance mapping curve that is nonlinear in the embodiments of this application, or may be the second original luminance mapping curve that is linear in the embodiments of this application. For implementation of step 1001, refer to implementation of Embodiment 1 to Embodiment 4 of this application.

Step 1002: Determine, based on the saturation mapping curve, a saturation adjustment factor corresponding to an initial luminance value of the to-be-processed video signal, where if the saturation mapping curve is represented by using a mapping relationship table, the saturation adjustment factor corresponding to the initial luminance value may be determined based on a horizontal coordinate value and a vertical coordinate value of a sampling point in the mapping relationship table by using a linear interpolation method, or if the saturation mapping curve is represented by using a curve expression, the initial luminance value of the to-be-processed video signal may be used as an input of the expression, and an output of the expression may be used as the saturation adjustment factor corresponding to the initial luminance value.

Step 1003: Determine a chrominance component adjustment factor corresponding to the to-be-processed video signal, namely, the HDR signal YUVO, based on the saturation adjustment factor and a preset chrominance component gain coefficient.

Step 1004: Adjust a chrominance value of the to-be-processed video signal, namely, the HDR signal YUV0, based on the chrominance component adjustment factor, to obtain a video signal YUV1 whose chrominance value has been adjusted.

Step 1005: Perform color space conversion on the video signal YUV1, to obtain an RGB-space video signal RGB1.

Step 1006: Perform RGB-space luminance mapping on the video signal RGB1 based on the original luminance mapping curve, to obtain a video signal RGB2 after the luminance mapping.

Step 1007: Perform color space conversion on the video signal RGB2 obtained after the luminance mapping, to obtain a YUV signal YUV2 in the nonlinear space NLTF1.

According to the foregoing method, chrominance values of two chrominance components of the HDR signal are separately adjusted in the YCC space, and then, the RGB-space luminance mapping is performed on the obtained video signal. Because chrominance of the video signal is adjusted before the RGB-space luminance mapping, a color that is of the video signal YUV2 and that is perceived by human eyes is closer to a color of the HDR signal YUVO obtained before the luminance mapping.

During specific implementation of step 1002, a luminance component Y0 of the to-be-processed video signal YUVO may be used as the initial luminance value to calculate a saturation mapping factor SMCoef, and if the luminance component Y0 of YUVO is already in the nonlinear space NLTF1 (a curve SMCurve is converted to the nonlinear space NLTF1 in which the HDR signal YUVO is located), luminance Y0_Norm obtained after the luminance component Y0 of the HDR signal YUVO is normalized may be used as an input of the saturation mapping curve, so that the saturation mapping factor SMCoef can be obtained through table lookup and by using the linear interpolation method.

Alternatively, if an expression of the saturation mapping curve is $f_{sm}NLTF1(eNLTF1) = f_{tm}NLTF1(eNLTF1)/eNLTF1$, the luminance Y0_Norm may be used as an independent variable, to calculate the saturation mapping factor SMCoef, where $SMCoef = f_{sm}NLTF1(Y0\_Norm)$.

In the foregoing example, the normalized luminance is Y0_Norm = (Y0 - minValueY)/(maxValueY - minValueY). For a 10-bit YUV signal with a limited range, minValueY = 64, and maxValueY = 940. For a 10-bit YUV signal with a full range, minValueY = 0, and maxValueY = 1023.

Based on a same invention idea, an embodiment of this application provides a video signal processing apparatus. The apparatus has a function of implementing the video signal processing method provided in any one of the foregoing method embodiments. The functions may be implemented by hardware, or by hardware executing corresponding software. The hardware or software includes one or more modules corresponding to the function.

The video signal processing apparatus provided in this embodiment of this application may be in a structure shown in FIG. 3c. A processing unit 301 may be configured to perform step S101 and step S102 shown in the method embodiment of this application. For example, the processing unit 301 may be further configured to perform steps in FIG. 7, FIG. 8, FIG. 9, and FIG. 10 in the method embodiments.

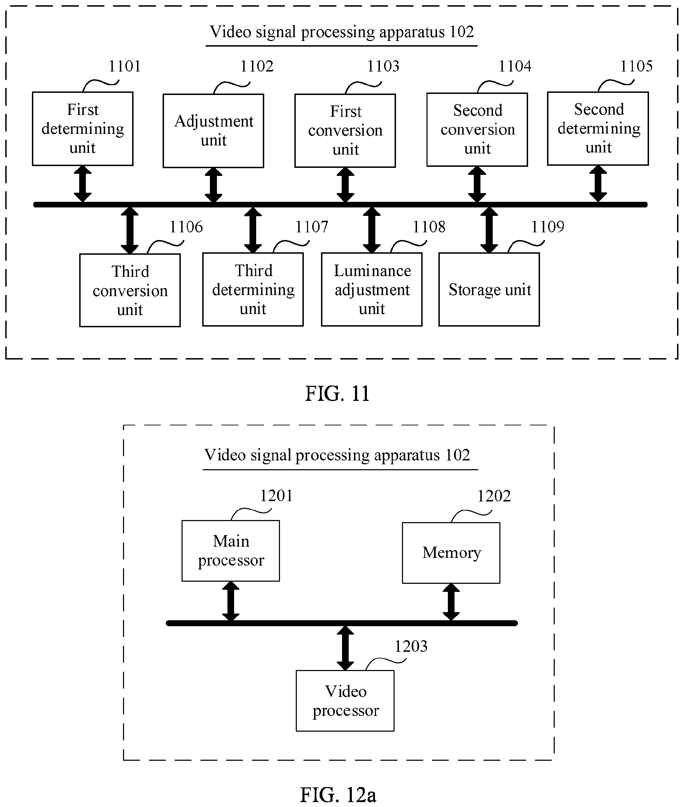

In an implementation, a structure of a video signal processing apparatus 102 provided in this embodiment of this application may be shown in FIG. 11. The video signal processing apparatus 102 may include a first determining unit 1101 and an adjustment unit 1102. The first determining unit 1101 may be configured to perform step S101 in the method provided in the embodiments of this application. The adjustment unit 1102 may be configured to perform step S102 in the method provided in the embodiments of this application.

According to the foregoing structure, the first determining unit of the video signal processing apparatus 102 may determine a saturation adjustment factor, and the adjustment unit of the video signal processing apparatus 102 may adjust a chrominance value of a to-be-processed video signal based on the saturation adjustment factor.

In a possible design, the saturation mapping curve is a function using an initial luminance value as an independent variable and using a ratio as a dependent variable.

In a possible design, the saturation adjustment factor may be determined according to the foregoing formula (29), where eNLTF1 is the initial luminance value, $f_{tm}NLTF1()$ represents a luminance mapping curve, $f_{sm}NLTF1()$ represents the saturation mapping curve, correspondingly, $f_{tm}NLTF1(eNLTF1)$ represents an adjusted luminance value corresponding to the initial luminance value, and $f_{sm}NLTF1(eNLTF1)$ represents the saturation adjustment factor corresponding to the initial luminance value.

In a possible design, the saturation adjustment factor may be determined by a mapping relationship table, and the mapping relationship table includes a horizontal coordinate value and a vertical coordinate value of at least one sampling point on the saturation mapping curve.

In a possible design, the adjustment unit may adjust the chrominance value of the to-be-processed video signal based on a product of a preset chrominance component gain coefficient and the saturation adjustment factor.

In a possible design, the chrominance value includes a first chrominance value of a first chrominance signal corresponding to the to-be-processed video signal and a second chrominance value of a second chrominance signal corresponding to the to-be-processed video signal, the preset chrominance component gain coefficient includes a preset first chrominance component gain coefficient and a preset second chrominance component gain coefficient, and the adjustment unit 1102 may be specifically configured to adjust the first chrominance value based on a product of the preset first chrominance component gain coefficient and the saturation adjustment factor, and adjust the second chrominance value based on a product of the preset second chrominance component gain coefficient and the saturation adjustment factor.

In a possible design, the saturation mapping curve belongs to target nonlinear space, a preset first original luminance mapping curve is a nonlinear curve, and the video signal processing apparatus 102 may further include a first conversion unit 1103, a second conversion unit 1104, and a second determining unit 1105. The first conversion unit 1103 is configured to perform nonlinear-space-to-linear-space conversion on a first horizontal coordinate value and a first vertical coordinate value that correspond to at least one sampling point on the first original luminance mapping curve, to obtain a second horizontal coordinate value and a second vertical coordinate value. The second conversion unit 1104 is configured to perform linear-space-to-nonlinear-space conversion on the second horizontal coordinate value and the second vertical coordinate value, to obtain the initial luminance value and the adjusted luminance value. The second determining unit 1105 is configured to determine the luminance mapping curve based on a mapping relationship between the initial luminance value and the adjusted luminance value, where the luminance mapping curve belongs to the target nonlinear space.

In a possible design, if the saturation mapping curve belongs to target nonlinear space and a preset second original luminance mapping curve is a linear curve, the video signal processing apparatus 102 may further include a third conversion unit 1106 and a third determining unit 1107. The third conversion unit 1106 is configured to perform linear-space-to-nonlinear-space conversion on a third horizontal coordinate value and a third vertical coordinate value that correspond to at least one sampling point on the second original luminance mapping curve, to obtain the initial luminance value and the adjusted luminance value. The third determining unit 1107 is configured to determine the luminance mapping curve based on a mapping relationship between the initial luminance value and the adjusted luminance value, where the luminance mapping curve belongs to the target nonlinear space.

In a possible design, the video signal processing apparatus 102 may further include a luminance adjustment unit 1108, configured to adjust the initial luminance value based on the luminance mapping curve, to obtain the adjusted luminance value.

In a possible design, the luminance adjustment unit 1108 is specifically configured to determine, based on a target first horizontal coordinate value corresponding to the initial luminance value, a target first vertical coordinate value corresponding to the target first horizontal coordinate as the adjusted luminance value.

In a possible design, the luminance adjustment unit 1108 is specifically configured to determine, based on a target third horizontal coordinate value corresponding to the initial luminance value, a target third vertical coordinate value corresponding to the target third horizontal coordinate as the adjusted luminance value.

For example, the video signal processing apparatus 102 shown in FIG. 11 may further include a storage unit 1109, configured to store a computer program, an instruction, and related data, to support the first determining unit 1101, the adjustment unit 1102, the first conversion unit 1103, the second conversion unit 1104, the second determining unit 1105, the third conversion unit 1106, the third determining unit 1107, and the luminance adjustment unit 1108 in implementing functions in the foregoing example.

It should be understood that the first determining unit 1101, the adjustment unit 1102, the first conversion unit 1103, the second conversion unit 1104, the second determining unit 1105, the third conversion unit 1106, the third determining unit 1107, and the luminance adjustment unit 1108 of the video signal processing apparatus 102 shown in FIG. 11 may be a central processing unit, a general purpose processor, a digital signal processor, an application-specific integrated circuit, a field programmable gate array or another programmable logic device, a transistor logic device, a hardware component, or any combination thereof, and may implement or execute various example logical blocks, modules, and circuits described with reference to content disclosed in the embodiments of this application. Alternatively, the processor may be a combination implementing a computing function, for example, a combination including one or more microprocessors, or a combination of a digital signal processor and a microprocessor. In addition, the storage unit that may be included in the video signal processing apparatus 102 may be a volatile memory or a non-volatile memory, or may include both a volatile memory and a non-volatile memory.

For example, as shown in FIG. 12a, another possible structure of the video signal processing apparatus 102 provided in this embodiment of this application includes a main processor 1201, a memory 1202, and a video processor 1203. The main processor 1201 may be configured to support the video signal processing apparatus 102 in implementing a related function other than video signal processing. For example, the main processor 1201 may be configured to determine a saturation adjustment factor corresponding to an initial luminance value of a to-be-processed video signal. For a step performed by the main processor 1201, refer to step S101 of the method. The main processor 1201 may be further configured to determine a saturation mapping curve based on a luminance mapping curve and/or an original luminance mapping curve, where the luminance mapping curve and/or the original luminance mapping curve may be stored in the memory 1202. The video processor 1203 may be configured to support the video signal processing apparatus 102 in implementing a related function of video signal processing. For example, the video processor 1203 may be configured to adjust a chrominance value of the to-be-processed video signal based on the saturation adjustment factor. The video processor 1203 may be further configured to support the video signal processing apparatus 102 in performing color space conversion and RGB-space luminance mapping on the video signal. For example, the video processor 1203 may support the video signal processing apparatus 102 in performing the method shown in FIG. 7. For a step performed by the video processor 1203, refer to step S102 of the method.

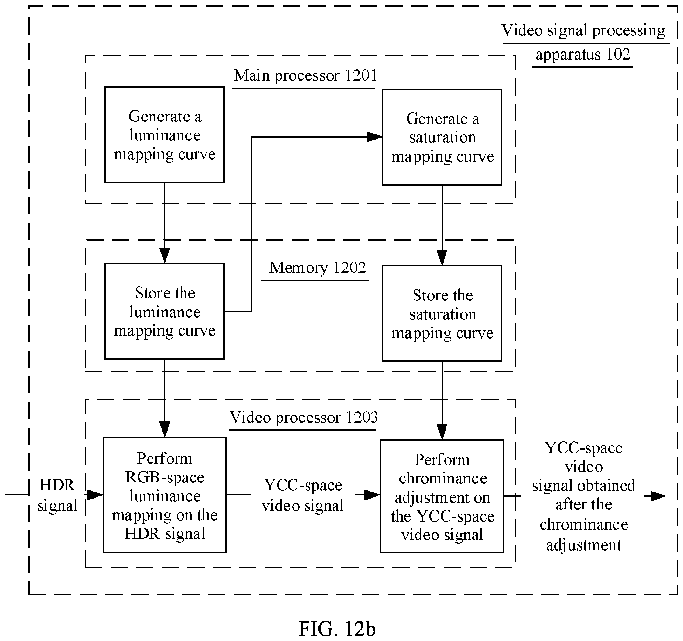

For example, as shown in FIG. 12b, in a process in which the video signal processing apparatus 102 performs RGB-space luminance mapping on an HDR signal, and adjusts a chrominance value of a YCC-space video signal obtained after the luminance mapping, the video processor 1203 may be configured to perform the RGB-space luminance mapping on the HDR signal based on the original luminance mapping curve (for example, a first original luminance mapping curve that is nonlinear) stored in the memory 1202, convert, to YCC space needed for displaying, the video signal obtained after the luminance mapping, and adjust, based on the saturation mapping curve stored in the memory 1202, the chrominance value of a chrominance component of the video signal on which the luminance mapping has been performed and that is converted to the YCC space, where a YCC-space video signal obtained after chrominance adjustment may be used for displaying. The main processor 1201 may be configured to generate the original luminance mapping curve that is needed by the video processor 1203 for performing the RGB-space luminance mapping on the HDR signal, and may be configured to generate, based on the original luminance mapping curve, the saturation mapping curve that is needed by the video processor 1203 for adjusting the chrominance value of the YCC-space video signal. The memory 1202 may be configured to store the original luminance mapping curve and/or the saturation mapping curve.

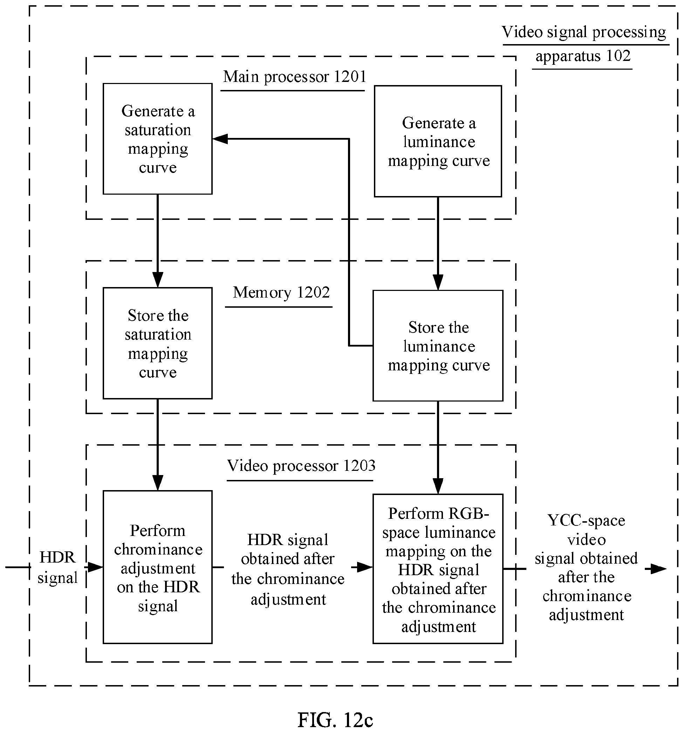

For example, as shown in FIG. 12c, in a process in which the video signal processing apparatus 102 adjusts chrominance of an HDR signal, performs RGB-space luminance mapping on an HDR signal obtained after chrominance adjustment, and performs color space conversion, to obtain a YCC-space video signal, the video processor 1203 may be configured to adjust a chrominance value of a chrominance component of the HDR signal based on the saturation mapping curve stored in the memory 1202, perform, based on the original luminance mapping curve (for example, a first original luminance mapping curve that is nonlinear) stored in the memory 1202, the RGB-space luminance mapping on the HDR signal whose chrominance value has been adjusted, and convert, to YCC space, the video signal obtained after the luminance mapping, where a YCC-space video signal obtained after the chrominance adjustment may be used for displaying. The main processor 1201 may be configured to generate the saturation mapping curve that is needed by the video processor 1203 for adjusting the chrominance value of the HDR signal, and may be configured to generate the original luminance mapping curve that is needed by the video processor 1203 for performing the RGB-space luminance mapping on the HDR signal. The memory 1202 may be configured to store the original luminance mapping curve and/or the saturation mapping curve.

It should be understood that the video signal processing apparatus 102 shown in FIG. 12a to FIG. 12c merely shows, by way of example, a structure needed by the video signal processing apparatus 102 for performing the video signal processing method in the embodiments of this application. This embodiment of this application does not exclude another structure of the video signal processing apparatus 102. For example, the video signal processing apparatus 102 may further include a display apparatus, configured to display the YCC-space video signal that is obtained after the video processor 1203 processes the HDR signal and on which the chrominance adjustment has been performed. For another example, the video signal processing apparatus 102 may further include a necessary interface, to implement input of the to-be-processed video signal and output of the processed video signal.

In addition, it should be understood that all steps performed by the video signal processing apparatus 102 can be completed by the main processor 1201. In this case, the video signal processing apparatus 102 may include only the main processor 1201 and the memory 1202.

During specific implementation, the main processor 1201 and the video processor 1203 each may be a central processing unit, a general purpose processor, a digital signal processor, an application-specific integrated circuit, a field programmable gate array or another programmable logic device, a transistor logic device, a hardware component, or any combination thereof, and may implement or execute various example logical blocks, modules, and circuits described with reference to content disclosed in this embodiment of this application. Alternatively, the processor may be a combination implementing a computing function, for example, a combination including one or more microprocessors, or a combination of a digital signal processor and a microprocessor. In addition, during implementation, a function of the video processor 1203 may be implemented by the main processor 1201 by using software.

For example, the video signal processing apparatus 102 provided in this embodiment of this application may be used in an intelligent device such as a set top box, a television, or a mobile phone, another display device, and an image processing device, to support the device in implementing the video signal processing method provided in the embodiments of this application.

Based on a same invention idea, an embodiment of this application provides a computer program product, including a computer program. When the computer program is executed on a computer, the computer is enabled to implement the function in any one of the foregoing video signal processing method embodiments.

Based on a same invention idea, an embodiment of this application provides a computer program. When the computer program is executed on a computer, the computer is enabled to implement the function in any one of the foregoing video signal processing method embodiments.

Based on a same invention idea, an embodiment of this application provides a computer readable storage medium, configured to store a program and an instruction. When the program and the instruction are invoked and executed on a computer, the computer may be enabled to implement the function in any one of the foregoing video signal processing method embodiments

It should be understood that the first original luminance mapping curve in the embodiments of this application may be a 100-nit luminance mapping curve, a 150-nit luminance mapping curve, a 200-nit luminance mapping curve, a 250-nit luminance mapping curve, a 300-nit luminance mapping curve, a 350-nit luminance mapping curve, or a 400-nit luminance mapping curve. The first original luminance mapping curve may be used to map luminance of a video signal $Y_{dPQ}$, to obtain a video signal $Y_{tPQ}$ after the mapping. For a mapping formula, refer to the foregoing formula (39) in this application.

Specifically, if the first original luminance mapping curve is a 100-nit luminance mapping curve, the first original luminance mapping curve may have an expression shown in formula (9).

If a luminance range obtained before the luminance mapping is 0-1000 nits, and a luminance range obtained after the luminance mapping is 0-150 nits, the first original luminance mapping curve may have the following expression:

$$f_{tm}(e) = \begin{cases} e, & \text{when } e \leq 0.3468 \\ hmt(e), & \text{when } 0.3468 < e \leq 0.7518 \quad (56). \\ 0.549302, & \text{when } e > 0.7518 \end{cases}$$

The function hmt() may be defined as follows:

$$hmt(x) = 0.3468 \times \alpha_0(x) + 0.5493 \times \alpha_1(x) + \beta_0(x) \quad (57),$$

where

$$\begin{cases} \alpha_0(x) = \dfrac{(-0.2885 + 2x)(0.7518 - x)^2}{0.0665} \\ \alpha_1(x) = \dfrac{(1.9087 - 2x)(x - 0.3468)^2}{0.0665} \\ \beta_0(x) = \dfrac{(x - 0.3468)(x - 0.7518)^2}{0.1641} \end{cases}.$$

If a luminance range obtained before the luminance mapping is 0-1000 nits, and a luminance range obtained after the luminance mapping is 0-200 nits, the first original luminance mapping curve may have the following expression:

$$f_{tm}(e) = \begin{cases} e, & \text{when } e \leq 0.4064 \\ hmt(e), & \text{when } 0.4064 < e \leq 0.7518 \quad (58). \\ 0.579133, & \text{when } e > 0.7518 \end{cases}$$

The function hmt() may be defined as follows:

$$hmt(x) = 0.4064 \times \alpha_0(x) + 0.5791 \times \alpha_1(x) + \beta_0(x) \quad (59),$$

where

$$
\begin{cases}
\alpha_0(x) = \dfrac{(-0.4675 + 2x)(0.7518 - x)^2}{0.0412} \\[2mm]
\alpha_1(x) = \dfrac{(1.849 - 2x)(x - 0.4064)^2}{0.0412} \\[2mm]
\beta_0(x) = \dfrac{(x - 0.4064)(x - 0.7518)^2}{0.1193}
\end{cases}.
$$

If a luminance range obtained before the luminance mapping is 0-1000 nits, and a luminance range obtained after the luminance mapping is 0-250 nits, the first original luminance mapping curve may have the following expression:

$$
f_{tm}(e) = \begin{cases}
e, & \text{when } e \leq 0.4533 \\
hmt(e), & \text{when } 0.4533 < e \leq 0.7518 \\
0.602559, & \text{when } e > 0.7518
\end{cases} \quad (60).
$$

The function hmt() may be defined as follows:

$$hmt(x) = 0.4533 \times \alpha_0(x) + 06026 \times \alpha_1(x) + \beta_0(x) \quad (61),$$

where

$$
\begin{cases}
\alpha_0(x) = \dfrac{(-0.6080 + 2x)(0.7518 - x)^2}{0.0266} \\[2mm]
\alpha_1(x) = \dfrac{(1.8022 - 2x)(x - 0.4533)^2}{0.0266} \\[2mm]
\beta_0(x) = \dfrac{(x - 0.4533)(x - 0.7518)^2}{0.0891}
\end{cases}.
$$

If a luminance range obtained before the luminance mapping is 0-1000 nits, and a luminance range obtained after the luminance mapping is 0-300 nits, the first original luminance mapping curve may have the following expression:

$$
f_{tm}(e) = \begin{cases}
e, & \text{when } e \leq 0.4919 \\
hmt(e), & \text{when } 0.4919 < e \leq 0.7518 \\
0.621863, & \text{when } e > 0.7518
\end{cases} \quad (62).
$$

The function hmt() may be defined as follows:

$$hmt(x) = 0.4919 \times \alpha_0(x) + 0.6219 \times \alpha_1(x) + \beta_0(x) \quad (63),$$

where

$$
\begin{cases}
\alpha_0(x) = \dfrac{(-0.7239 + 2x)(0.7518 - x)^2}{0.0176} \\[2mm]
\alpha_1(x) = \dfrac{(1.7636 - 2x)(x - 0.4919)^2}{0.0176} \\[2mm]
\beta_0(x) = \dfrac{(x - 0.4919)(x - 0.7518)^2}{0.0676}
\end{cases}.
$$

If a luminance range obtained before the luminance mapping is 0-1000 nits, and a luminance range obtained after the luminance mapping is 0-350 nits, the first original luminance mapping curve may have the following expression:

$$f_{tm}(e) = \begin{cases} e, & when\ e\ \leq\ 0.5247 \\ hmt(e), & when\ 0.5247\ <\ e\ \leq\ 0.7518 \\ 0.638285, & when\ e\ >\ 0.7518 \end{cases} (64).$$

The function hmt() may be defined as follows:

$$hmt(x) = 0.5247\ x\ \alpha_0(x) + 0.6383\ x\ \alpha_1(x) + \beta_0(x)\ (65),$$

where

$$\begin{cases} \alpha_0(x) = \frac{(-0.8224 + 2x)(0.7518 - x)^2}{0.0117} \\ \alpha_1(x) = \frac{(1.7307 - 2x)(x - 0.5247)^2}{0.0117} \\ \beta_0(x) = \frac{(x - 0.5247)(x - 0.7518)^2}{0.0516} \end{cases}.$$

If a luminance range obtained before the luminance mapping is 0-1000 nits, and a luminance range obtained after the luminance mapping is 0-400 nits, the first original luminance mapping curve may have the following expression:

$$f_{tm}(e) = \begin{cases} e, & when\ e\ \leq\ 0.5533 \\ hmt(e), & when\ 0.5533\ <\ e\ \leq\ 0.7518 \\ 0.652579, & when\ e\ >\ 0.7518 \end{cases} (66).$$

The function hmt() may be defined as follows:

$$hmt(x) = 0.5533\ x\ \alpha_0(x) + 0.6526\ x\ \alpha_1(x) + \beta_0(x)\ (67),$$

where

$$\begin{cases} \alpha_0(x) = \frac{(-0.9082 + 2x)(0.7518 - x)^2}{0.0078} \\ \alpha_1(x) = \frac{(1.7022 - 2x)(x - 0.5533)^2}{0.0078} \\ \beta_0(x) = \frac{(x - 0.5533)(x - 0.7518)^2}{0.0394} \end{cases}.$$

For example, the following provides an example of a process of processing a signal $Y'_sCb_sCr_s$. It is assumed that $Y'_sCb_sCr_s$ is a 4:4:4 nonlinear video signal YCbCr that is restored by a terminal through AVS2 decoding and reconstruction and chrominance upsampling, and each component of the signal is a 10-bit digital code value.

(1) A signal YiCbiCri is calculated, where the signal YiCbiCri is a video signal that has been processed by using the chrominance processing method provided in the embodiments of this application.

(a) Normalized original luminance is calculated according to the following formula:

$$Y_{norm} = (Y - 64)/(940 - 64)\ (68),$$

where

$Y_{norm}$ should be clipped (clip) to a range [0, 1].

(b) A saturation mapping gain SmGain is calculated according to the following formula:

$$SmGain \ = \ f_{sm}(Y_{norm}) \ (69),$$

where

$f_{sm}()$ is a saturation mapping curve, and is calculated based on a luminance mapping curve $f_{tm}()$, and calculation steps are as follows:

i. The luminance mapping curve ftm() is converted to linear space, to obtain a linear luminance mapping curve:

$$f_{tmL}(L) \ = \ PQ\_EOTF\Big(f_{tm}\big(PQ\_EOTF^{-1}(L)\big)\Big) \ (70),$$

where

L is input linear luminance in a unit of nit, and a result of $f_{tm}(L)$ is linear luminance in a unit of nit.

ii. The linear luminance mapping curve $f_{tmL}()$ is converted to HLG space, to obtain a luminance mapping curve on an HLG signal:

$$f_{tmHLG}(e) \ = \ HLG\_OETF\left(\frac{PQ\_EOTF\Big(f_{tm}\big(PQ\_EOTF^{-1}\big(1000 \text{ x } HLG\_OETF^{-1}(e)\big)\big)\Big)}{1000}\right) \ (71),$$

where

e is normalized HLG signal luminance, and a result of $f_{tmHLG}(e)$ is normalized HLG signal luminance.

iii. The saturation mapping curve $f_{sm}()$ is calculated:

$$f_{sm}(e) \ = \ \frac{f_{tmHLG}(e)}{e} \ = \ HLG\_OETF\left(\frac{PQ\_EOTF\Big(f_{tm}\big(PQ\_EOTF^{-1}\big(1000 \text{ x } HLG\_OETF^{-1}(e)\big)\big)\Big)}{1000}\right)/e \ (72),$$

where

e is input to the saturation mapping curve, and $f_{sm}(e)$ is a saturation mapping gain in the HLG space.

(c) The signal after saturation mapping is calculated:

$$\begin{pmatrix} Y_i \\ Cb_i \\ Cr_i \end{pmatrix} = \begin{pmatrix} 1 & 0 & 0 \\ 0 & SmGain & 0 \\ 0 & 0 & SmGain \end{pmatrix} \text{ x } \begin{pmatrix} Y - 64 \\ Cb - 512 \\ Cr - 512 \end{pmatrix} + \begin{pmatrix} 64 \\ 512 \\ 512 \end{pmatrix} \ (73),$$

where

the signal YiCbiCri is a 10-bit digital code value with a limited range, where a value of $Y_i$ should be in an interval [64, 940], and values of Cbi and Cri should be in the interval [64, 960].

(2) A nonlinear signal $R'_sG'_sB'_s$ is calculated:

$$\begin{pmatrix} Y_{sf} \\ Cb_{sf} \\ Cr_{sf} \end{pmatrix} = \begin{pmatrix} \frac{1}{876} & 0 & 0 \\ 0 & \frac{1}{896} & 0 \\ 0 & 0 & \frac{1}{896} \end{pmatrix} \text{ x } \begin{pmatrix} Y_i - 64 \\ Cb_i - 512 \\ Cr_i - 512 \end{pmatrix} \ (74);$$

and

$$\begin{pmatrix} R`_s \\ G`_s \\ B`_s \end{pmatrix} = \begin{pmatrix} 1 & 0 & 1.4746 \\ 1 & -0.1645 & -0.5713 \\ 1 & 1.8814 & 0 \end{pmatrix} \times \begin{pmatrix} Y_{sf} \\ Cb_{sf} \\ Cr_{sf} \end{pmatrix} \quad (75),$$

where
the signal $Y'_sCb_sCr_s$ is a 10-bit digital code value with a limited range, the $R'_sG'_sB'_s$ obtained after processing is a floating-point nonlinear color value, and a value should be clipped to the interval [0, 1].
(3) A linear signal $R_sG_sB_s$ is calculated, and linear luminance $Y_s$ of the input signal is calculated:

$$E_s = HLG\_OETF^{-1}(E`_s) \quad (76),$$

where
in the equation, $E_s$ represents a linear color value of any component of the signal $R_sG_sB_s$, a value thereof is in the interval [0, 1], $E'_s$ represents a nonlinear color value of any component of the signal $R'_sG'_sB'_s$, and the function $HLG\_OETF^{-1}()$ is defined as follows according to ITU BT.2100:

$$HLG\_OETF^{-1}(E`) = \begin{cases} \dfrac{E`^2}{3} & 0 \leq E` \leq \frac{1}{2} \\ \dfrac{\left(exp\left(\frac{(E` - c)}{a}\right) + b\right)}{12} & \frac{1}{2} < E` \leq 1 \end{cases} \quad (77),$$

where
a = 0.17883277, b = 1 - 4a, and c = 0.5 - a x ln(4a).
The linear luminance $Y_s$ is calculated as follows:

$$Y_s = 0.2627R_s + 0.6780G_s + 0.0593B_s \quad (78),$$

where
$Y_s$ is a real number, and a value thereof is in the interval [0, 1].
(4) A $Y_t$ signal is calculated.

 a. Display luminance $Y_d$ is calculated:

$$Y_d = 1000(Y_s)^{1.2} \quad (79).$$

 b. Visual linear luminance $Y_{dPQ}$ is calculated:

$$Y_{dPQ} = PQ\_EOTF^{-1}(Y_d) \quad (80),$$

where

$$PQ\_EOTF^{-1}(E) = \left(\frac{c_1 + c_2(E/10000)^{m_1}}{1 + c_3(E/10000)^{m_1}}\right)^{m_2} \quad (81);$$

 $m_1$ = 2610/16384 = 0.1593017578125;
 $m_2$ = 2523/4096 x 128 = 78.84375;
 $c_1$ = 3424/4096 = 0.8359375 = $c_3$ - $c_2$ + 1;
 $c_2$ = 2413/4096 x 32 = 18.8515625; and

$c_3$ = 2392/4096 x 32 = 18.6875.

c. Luminance mapping is performed to obtain $Y_{tPQ}$:

$$Y_{tPQ} = f_{tm}(Y_{dPQ}) \quad (82),$$

where
$f_{tm}()$ in the equation is defined as follows:

$$f_{tm}(e) = \begin{cases} e, & \text{when } e \leq 0.4064 \\ fmt(e), & \text{when } 0.4064 < e \leq 0.7518 \\ 0.579133, & \text{when } e > 0.7518 \end{cases} \quad (83).$$

The function hmt() is defined as follows:

$$\mathrm{h}mt(x) = 0.4064 \times \alpha_0(x) + 0.5791 \times \alpha_1(x) + \beta_0(x) \quad (84),$$

where

$$\begin{cases} \alpha_0(x) = \dfrac{(-0.4675 + 2x)(0.7518 - x)^2}{0.0412} \\ \alpha_1(x) = \dfrac{(1.849 - 2x)(x - 0.4064)^2}{0.0412} \\ \beta_0(x) = \dfrac{(x - 0.4064)(x - 0.7518)^2}{0.1193} \end{cases}.$$

d. Linear luminance $Y_t$ obtained after normalized luminance mapping is calculated:

$$Y_t = PQ\_EOTF(Y_{tPQ}) \quad (85),$$

where

$$PQ\_EOTF(E') = 10000 \left( \frac{max[(E'^{1/m_2} - c_1), 0]}{c_2 - c_3 E'^{1/m_2}} \right)^{1/m_1} \quad (86).$$

Therefore, a formula of calculating Yt is:

$$Y_t = PQ\_EOTF(f_{tm}(PQ\_EOTF^{-1}(1000(Y_s)^{1.2}))) \quad (87),$$

where
$Y_t$ is a real number, and a value thereof should be clipped to an interval [0, 200].

(5) A luminance mapping gain TmGain is calculated.
Calculation of the luminance mapping gain TmGain is shown in the following equation:

$$TmGain = \begin{cases} \dfrac{Y_t}{Y_s}, & Y_s \neq 0 \\ 0, & Y_s = 0 \end{cases} \quad (88).$$

(6) A signal $R_{tm}G_{tm}B_{tm}$ is calculated:

$$E_{tm} \;=\; E_s \;\times\; TmGain \;\; (89),$$

where

in the equation, $E_s$ represents any component of the signal $R_s G_s B_s$, and $E_{tm}$ represents any component of the signal $R_{tm}G_{tm}B_{tm}$.

(7) A signal $R_t G_t B_t$ is calculated (color gamut mapping):

$$\begin{pmatrix} R_t \\ G_t \\ B_t \end{pmatrix} = \begin{pmatrix} 1.6605 & -0.5876 & -0.0728 \\ -0.1246 & 1.1329 & -0.0083 \\ -0.0182 & -0.1006 & 1.1187 \end{pmatrix} \times \begin{pmatrix} R_{tm} \\ G_{tm} \\ B_{tm} \end{pmatrix} \;\; (90),$$

where

$R_t G_t B_t$ obtained after processing is a floating-point linear color value, and a value should be clipped to the interval [0, 200].

(8) A signal $R'_t G'_t B'_t$ is calculated:

$$E\grave{\,}_t = (E_t/200)^{1/\gamma} \;\; (91).$$

(9) A signal $Y_t Cb_t Cr_t$ is calculated:

$$\begin{pmatrix} Y_{tf} \\ Cb_{tf} \\ Cr_{tf} \end{pmatrix} = \begin{pmatrix} 0.2126 & 0.7152 & 0.0722 \\ -0.1146 & -0.3854 & 0.5 \\ 0.5 & -0.4542 & -0.0458 \end{pmatrix} \times \begin{pmatrix} R\grave{\,}_t \\ G\grave{\,}_t \\ B\grave{\,}_t \end{pmatrix} \;\; (92);$$

and

$$\begin{pmatrix} Y\grave{\,}_t \\ Cb_t \\ Cr_t \end{pmatrix} = \begin{pmatrix} 876 & 0 & 0 \\ 0 & 896 & 0 \\ 0 & 0 & 896 \end{pmatrix} \times \begin{pmatrix} Y_{tf} \\ Cb_{tf} \\ Cr_{tf} \end{pmatrix} + \begin{pmatrix} 64 \\ 512 \\ 512 \end{pmatrix} \;\; (93).$$

$R'_t G'_t B'_t$ is a nonlinear color value, and the value is in the interval [0, 1]. A signal $Y'_t Cb_t Cr_t$ obtained after processing is a 10-bit digital code value with a limited range, where a value of $Y'_t$ should be in an interval [64, 940], and values of $Cb_t$ and $Cr_t$ should be in the interval [64, 960]. For example, $\gamma$ in this embodiment may be 2.2, 2.4, or another value. The value of $\gamma$ may be selected based on an actual status, and this is not limited in this embodiment of this application.

For example, this application provides a color gamut conversion method. The color gamut conversion method may be used for conversion from color gamut BT.2020 to color gamut BT.709. The conversion method is a compatibility and adaptation process from an HLG signal to an SDR signal. Because the processing method has been conceptually introduced in the BT.2407 report, content of the international telecommunication union (International Telecommunication Union, ITU) report is cited in this specification for informative description.

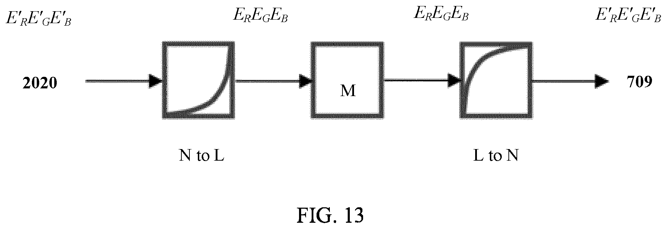

According to part 2 of the BT.2407-0 report, conversion from a BT.2020 wide color gamut signal to a BT.709 signal may be implemented by using a linear matrix transformation-based method. In addition to performing hard-clip on an output signal, the method is completely an inverse process of the ITU standard BT.2087. The conversion process is shown in FIG. 13, and specifically includes the following steps.

(1) Nonlinear-to-linear-signal conversion (NtoL)

It is assumed that a normalized BT.2020 nonlinear RGB signal is $(E'_R E'_G E'_B)$, and each component signal is converted by using a transfer function to obtain a linear signal $(E_R E_G E_B)$. In this proposal, the transfer function is an HLG EOTF function (according to Table 5 of ITU BT.2100-1, for HLG, refer to the definition of the EOTF).

(2) Matrix (M)

A linear RGB signal in the BT.2020 color gamut may be converted into a linear RGB signal in the BT.709 color gamut through calculation by using the following matrix:

$$\begin{pmatrix} E_R \\ E_G \\ E_B \end{pmatrix}_{709} = \begin{pmatrix} 1.6605 & -0.5876 & -0.0728 \\ -0.1246 & 1.1329 & -0.0083 \\ -0.0182 & -0.1006 & 1.1187 \end{pmatrix} \begin{pmatrix} E_R \\ E_G \\ E_B \end{pmatrix}_{2020} \quad (94).$$

(3) Linear-signal-to-nonlinear-signal conversion (LtoN)

According to the ITU-BT.2087-0 standard, a linear RGB signal ($E_R E_G E_B$) in the BT.709 color gamut is used for a BT.709 display device, and should be converted into a nonlinear RGB signal ($E'_R E'_G E'_B$) in the BT.709 color gamut by using the OETF defined in the ITU BT.1886. However, it is advised in this proposal that 2.2 is used as a transfer curve used for linear-to-nonlinear-signal conversion. The formula is represented as follows:

$$E` = (E)^{1/\gamma}, \ 0 \ \le \ E \ \le \ 1 \ (95).$$

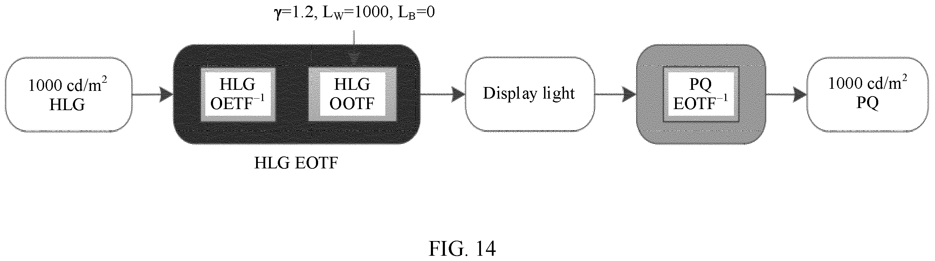

It should be understood that $\gamma$ in formula (95) may be 2.2, 2.4, or another value. The value of $\gamma$ may be selected based on an actual status, and this is not limited in this embodiment of this application.
For example, an embodiment of this application provides a compatibility and adaptation processing process from an HDR HLG signal to HDR PQTV.
According to part 7.2 of the BT.2390-4 ITU report, first, it is agreed that reference peak luminance $L_w$ from an HLG signal to a PQ signal is 1000 nits, and a black level $L_b$ is 0 nits.
According to the report, the process shown in FIG. 14 is used. When HDR content is in a color volume below 1000 nits, a PQ image the same as an HLG image may be generated. A specific process is as follows:

(1) A linear luminance source signal may be generated by processing a 1000-nit HLG source signal by using an inverse function of the OETF of HLG.
(2) A linear luminance display signal may be generated by processing the linear luminance source signal by using an OOTF function of the HLG.
(3) A 1000-nit PQ display signal may be generated by processing the linear luminance display signal by using an EOTF inverse function of PQ.

A complete processing process in this scenario is shown as follows:
It is assumed that $Y_s Cb_s Cr_s$ is a 4:4:4 nonlinear video signal YCbCr that is restored by a terminal through AVS2 decoding and reconstruction and chrominance upsampling. Each component is a 10-bit digital code value.

(1) A nonlinear signal $R'_s G'_s B'_s$ is calculated:

$$\begin{pmatrix} Y_{sf} \\ Cb_{sf} \\ Cr_{sf} \end{pmatrix} = \begin{pmatrix} \frac{1}{876} & 0 & 0 \\ 0 & \frac{1}{896} & 0 \\ 0 & 0 & \frac{1}{896} \end{pmatrix} \times \begin{pmatrix} Y_s - 64 \\ Cb_s - 512 \\ Cr_s - 512 \end{pmatrix} \ (96);$$

and

$$\begin{pmatrix} R`_s \\ G`_s \\ B`_s \end{pmatrix} = \begin{pmatrix} 1 & 0 & 1.4746 \\ 1 & -0.1645 & -0.5713 \\ 1 & 1.8814 & 0 \end{pmatrix} \times \begin{pmatrix} Y_{sf} \\ Cb_{sf} \\ Cr_{sf} \end{pmatrix} \ (97),$$

where

the signal $Y_sCb_sCr_s$ is a 10-bit digital code value with a limited range, $R'_sG'_sB'_s$ obtained after processing is a floating-point nonlinear color value, and a value should be clipped to an interval [0, 1].

(2) A linear signal $R_sG_sB_s$ is calculated, and linear luminance $Y_s$ of the input signal is calculated:

$$E_s = HLG\_OETF^{-1}(E'_s) \quad (98),$$

where

in the equation, $E_s$ represents any component of the signal $R_sG_sB_s$, and $E'_s$ represents any component of the signal $R'_sG'_sB'_s$; and the function $HLG\_OETF^{-1}()$ is defined as follows according to ITU BT.2100:

$$HLG\_OETF^{-1}(E') = \begin{cases} \frac{E'^2}{3} & 0 \leq E' \leq \frac{1}{2} \\ \frac{\left(exp\left(\frac{(E' - c)}{a}\right) + b\right)}{12} & \frac{1}{2} < E' \leq 1 \end{cases} \quad (99),$$

where

a = 0.17883277, b = 1 - 4a, and c = 0.5 - a x ln(4a).

The linear luminance $Y_s$ is calculated as follows:

$$Y_s = 0.2627R_s + 0.6780G_s + 0.0593B_s \quad (100).$$

(3) A $Y_d$ signal is calculated:

$$Y_d = 1000(Y_s)^{1.2} \quad (101).$$

(4) A luminance mapping gain TmGain is calculated.

Calculation of the luminance mapping gain TmGain is shown in the following equation:

$$TmGain = \begin{cases} \frac{Y_d}{Y_s}, & Y_s \neq 0 \\ 0, & Y_s = 0 \end{cases} \quad (102).$$

(5) A signal $R_tG_tB_t$ is calculated:

$$E_t = E_s \times TmGain \quad (103),$$

where

in the equation, $E_s$ represents any component of the signal $R_sG_sB_s$, and $E_t$ represents any component of the signal $R_tG_tB_t$.

(6) A signal $R'_tG'_tB'_t$ is calculated:

$$E'_t = PQ\_EOTF^{-1}(E_t) \quad (104),$$

where

in the formula, the function $PQ\_EOTF^{-1}()$ is defined as follows with reference to Table 4 of ITU BT.2100:

$$PQ\_EOTF^{-1}(E) = \left(\frac{c_1 + c_2(E/10000)^{m_1}}{1 + c_3(E/10000)^{m_1}}\right)^{m_2};$$

$m_1 = 2610/16384 = 0.1593017578125;$

$m_2 = 2523/4096 \times 128 = 78.84375;$

$c_1 = 3424/4096 = 0.8359375 = c_3 - c_2 + 1;$

$c_2 = 2413/4096 \times 32 = 18.8515625;$ and

$c_3 = 2392/4096 \times 32 = 18.6875.$

(7) A signal $Y_t Cb_t Cr_t$ is calculated:

$$\begin{pmatrix} Y_{tf} \\ Cb_{tf} \\ Cr_{tf} \end{pmatrix} = \begin{pmatrix} 0.2627 & 0.6780 & 0.0593 \\ -0.1396 & -0.3604 & 0.5 \\ 0.5 & -0.4598 & -0.0402 \end{pmatrix} \times \begin{pmatrix} R`_t \\ G`_t \\ B`_t \end{pmatrix} \quad (105);$$

and

$$\begin{pmatrix} Y_t \\ Cb_t \\ Cr_t \end{pmatrix} = \begin{pmatrix} 876 & 0 & 0 \\ 0 & 896 & 0 \\ 0 & 0 & 896 \end{pmatrix} \times \begin{pmatrix} Y_{tf} \\ Cb_{tf} \\ Cr_{tf} \end{pmatrix} + \begin{pmatrix} 64 \\ 512 \\ 512 \end{pmatrix} \quad (106).$$

$R'_t G'_t B'_t$ is a floating-point nonlinear color value, and the value is in the interval [0, 1]. A signal $Y_t Cb_t Cr_t$ obtained after processing is a 10-bit digital code value with a limited range, where a value of $Y_o$ should be in an interval [64, 940], and values of $Cb_o$ and $Cr_o$ should be in an interval [64, 960].

It should be understood that, the processor mentioned in the embodiments of this application may be a central processing unit (Central Processing Unit, CPU), or may further be another general purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, a discrete gate or a transistor logic device, a discrete hardware component, or the like. The general purpose processor may be a microprocessor, or the processor may be any conventional processor or the like.

It should be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that the memory described in this specification includes but is not limited to these memories and any memory of another proper type.

It should be further understood that first, second, and various numerical numbers in this specification are only for differentiation for ease of description, but are not used to limit the scope of this application.

In this application, the term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In this application, "at least one" means one or more, and "a plurality of" means two or more. "At least one item (piece) of the following" or a similar expression thereof indicates any combination of these items, including any combination of singular items (pieces) or plural items (pieces). For example, "at least one item (piece) of a, b, or c" or "at least one item (piece) of a, b, and c" may indicate: a, b, c, a-b (that is, a and b), a-c, b-c, or a-b-c, where a, b, and c may be singular or plural.

It should be understood that, in the embodiments of this application, sequence numbers of the foregoing processes do not mean execution sequences. Some or all steps may be executed in parallel or in sequence. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, in other words, may be located at one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium and includes a plurality of instructions for instructing a computer device (which may be a personal computer, a server, a network device, or a terminal device) to perform all or some of the steps of the methods described in the embodiments of this application.

For related parts between the method embodiments of this application, refer to each other. The apparatus provided in each apparatus embodiment is configured to perform the method provided in the corresponding method embodiment. Therefore, each apparatus embodiment may be understood with reference to a related part in a related method embodiment.

Structural diagrams of the apparatuses provided in the apparatus embodiments of this application merely show simplified designs of the corresponding apparatuses. In actual application, the apparatus may include any quantity of transmitters, receivers, processors, memories, and the like, to implement functions or operations performed by the apparatuses in the apparatus embodiments of this application, and all apparatuses that can implement this application fall within the protection scope of this application.

Names of messages/frames/indication information, modules, units, or the like provided in the embodiments of this application are merely examples, and other names may be used provided that functions of the messages/frames/indication information, the modules, the units, or the like are the same.

The terms used in the embodiments of this application are merely for the purpose of illustrating specific embodiments, and are not intended to limit the present invention. The terms "a", "an" and "the" of singular forms used in the embodiments and the appended claims of this application are also intended to include plural forms, unless otherwise specified in the context clearly. It should also be understood that, the term "and/or" used in this specification indicates and includes any or all possible combinations of one or more associated listed items. The character "/" in this specification generally indicates an "or" relationship between the associated objects. If the character "/" appears in a formula involved in this specification, the character usually indicates that in the formula, an object appearing before the "/" is divided by an object appearing after the "/". If the character "^" appears in a formula involved in this specification, it generally indicates a mathematical power operation.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

Persons of ordinary skill in the art may understand that all or some of the steps of the method in the foregoing embodiment may be implemented by a program instructing related hardware. The program may be stored in a readable storage medium, in a device, such as a FLASH memory, or an EEPROM. When the program is executed, the program performs all or some of the steps described above.

In the foregoing specific implementations, the objective, technical solutions, and benefits of the present invention are further described in detail. It should be understood that different embodiments can be combined. The foregoing descriptions are merely specific implementations of this application, but are not intended to limit the protection scope of the present invention. Any combination, modification, equivalent replacement, or improvement made without departing from the spirit and principle of the present invention should fall within the protection scope of the present invention.

**Claims**

1.  A video signal processing method, comprising:

    determining a saturation adjustment factor corresponding to an initial luminance value of a to-be-processed video signal, wherein a mapping relationship between the saturation adjustment factor and the initial luminance value is determined by a saturation mapping curve, the saturation mapping curve is determined by a ratio of an adjusted luminance value to the initial luminance value, and the adjusted luminance value is obtained by mapping the initial luminance value based on a preset luminance mapping curve; and
    adjusting a chrominance value of the to-be-processed video signal based on the saturation adjustment factor.

2.  The method according to claim 1, wherein the saturation mapping curve is a function using the initial luminance value as an independent variable and using the ratio as a dependent variable.

3.  The method according to claim 1 or 2, wherein the saturation adjustment factor is determined according to the following formula:

$$f_{sm}NLTF1(eNLTF1) = f_{tm}NLTF1(eNLTF1)/eNLTF1,$$

    wherein
    eNLTF1 is the initial luminance value, $f_{tm}NLTF1()$ represents the luminance mapping curve, $f_{sm}NLTF1()$ represents the saturation mapping curve, correspondingly, $f_{tm}NLTF1(eNLTF1)$ represents the adjusted luminance value corresponding to the initial luminance value, and $f_{sm}NLTF1(eNLTF1)$ represents the saturation adjustment factor corresponding to the initial luminance value.

4.  The method according to claim 1 or 2, wherein the saturation adjustment factor is determined by a mapping relationship table, and the mapping relationship table comprises a horizontal coordinate value and a vertical coordinate value of as least one sampling point on the saturation mapping curve.

5.  The method according to any one of claims 1 to 4, wherein the adjusting a chrominance value of the to-be-processed video signal comprises:
    adjusting the chrominance value of the to-be-processed video signal based on a product of a preset chrominance component gain coefficient and the saturation adjustment factor.

6.  The method according to claim 5, wherein the chrominance value comprises a first chrominance value of a first chrominance signal corresponding to the to-be-processed video signal and a second chrominance value of a second chrominance signal corresponding to the to-be-processed video signal, the preset chrominance component gain coefficient comprises a preset first chrominance component gain coefficient and a preset second chrominance component gain coefficient, and the adjusting the chrominance value of the to-be-processed video signal based on a product of a preset chrominance component gain coefficient and the saturation adjustment factor comprises:

    adjusting the first chrominance value based on a product of the preset first chrominance component gain coefficient and the saturation adjustment factor; and
    adjusting the second chrominance value based on a product of the preset second chrominance component gain coefficient and the saturation adjustment factor.

7.  The method according to any one of claims 2 to 6, wherein the saturation mapping curve belongs to target nonlinear space, a preset first original luminance mapping curve is a nonlinear curve, and the method further comprises:

separately performing nonlinear-space-to-linear-space conversion on a first horizontal coordinate value and a first vertical coordinate value that correspond to at least one sampling point on the first original luminance mapping curve, to obtain a second horizontal coordinate value and a second vertical coordinate value;

separately performing linear-space-to-nonlinear-space conversion on the second horizontal coordinate value and the second vertical coordinate value, to obtain the initial luminance value and the adjusted luminance value; and

determining the luminance mapping curve based on a mapping relationship between the initial luminance value and the adjusted luminance value, wherein the luminance mapping curve belongs to the target nonlinear space.

8. The method according to any one of claims 2 to 6, wherein the saturation mapping curve belongs to target nonlinear space, a preset second original luminance mapping curve is a linear curve, and the method further comprises:

separately performing linear-space-to-nonlinear-space conversion on a third horizontal coordinate value and a third vertical coordinate value that correspond to at least one sampling point on the second original luminance mapping curve, to obtain the initial luminance value and the adjusted luminance value; and

determining the luminance mapping curve based on a mapping relationship between the initial luminance value and the adjusted luminance value, wherein the luminance mapping curve belongs to the target nonlinear space.

9. The method according to any one of claims 1 to 8, further comprising:

adjusting the initial luminance value based on the luminance mapping curve, to obtain the adjusted luminance value.

10. The method according to claim 9, wherein the adjusting the initial luminance value based on the luminance mapping curve, to obtain the adjusted luminance value comprises:

determining, based on a target first horizontal coordinate value corresponding to the initial luminance value, a target first vertical coordinate value corresponding to the target first horizontal coordinate as the adjusted luminance value.

11. The method according to claim 9, wherein the adjusting the initial luminance value based on the luminance mapping curve, to obtain the adjusted luminance value comprises:

determining, based on a target third horizontal coordinate value corresponding to the initial luminance value, a target third vertical coordinate value corresponding to the target third horizontal coordinate as the adjusted luminance value.

12. A video signal processing apparatus, comprising:

a first determining unit, configured to determine a saturation adjustment factor corresponding to an initial luminance value of a to-be-processed video signal, wherein a mapping relationship between the saturation adjustment factor and the initial luminance value is determined by a saturation mapping curve, the saturation mapping curve is determined by a ratio of an adjusted luminance value to the initial luminance value, and the adjusted luminance value is obtained by mapping the initial luminance value based on a preset luminance mapping curve; and

an adjustment unit, configured to adjust a chrominance value of the to-be-processed video signal based on the saturation adjustment factor.

13. The video signal processing apparatus according to claim 12, wherein the saturation mapping curve is a function using the initial luminance value as an independent variable and using the ratio as a dependent variable.

14. The video signal processing apparatus according to claim 12 or 13, wherein the saturation adjustment factor is determined according to the following formula:

$$f_{sm}NLTF1(eNLTF1) = f_{tm}NLTF1(eNLTF1)/eNLTF1,$$

wherein

eNLTF1 is the initial luminance value, $f_{tm}NLTF1()$ represents the luminance mapping curve, $f_{sm}NLTF1()$ represents the saturation mapping curve, correspondingly, $f_{tm}NLTF1(eNLTF1)$ represents the adjusted luminance value corresponding to the initial luminance value, and $f_{sm}NLTF1(eNLTF1)$ represents the saturation adjustment factor corresponding to the initial luminance value.

**15.** The video signal processing apparatus according to claim 12 or 13, wherein the saturation adjustment factor is determined by a mapping relationship table, and the mapping relationship table comprises a horizontal coordinate value and a vertical coordinate value of as least one sampling point on the saturation mapping curve.

**16.** The video signal processing apparatus according to any one of claims 12 to 14, wherein the adjustment unit is specifically configured to:
adjust the chrominance value of the to-be-processed video signal based on a product of a preset chrominance component gain coefficient and the saturation adjustment factor.

**17.** The video signal processing apparatus according to claim 16, wherein the chrominance value comprises a first chrominance value of a first chrominance signal corresponding to the to-be-processed video signal and a second chrominance value of a second chrominance signal corresponding to the to-be-processed video signal, the preset chrominance component gain coefficient comprises a preset first chrominance component gain coefficient and a preset second chrominance component gain coefficient, and the adjustment unit is specifically configured to:

adjust the first chrominance value based on a product of the preset first chrominance component gain coefficient and the saturation adjustment factor; and
adjust the second chrominance value based on a product of the preset second chrominance component gain coefficient and the saturation adjustment factor.

**18.** The video signal processing apparatus according to any one of claims 13 to 17, wherein the saturation mapping curve belongs to target nonlinear space, a preset first original luminance mapping curve is a nonlinear curve, and the video signal processing apparatus further comprises:

a first conversion unit, configured to separately perform nonlinear-space-to-linear-space conversion on a first horizontal coordinate value and a first vertical coordinate value that correspond to at least one sampling point on the first original luminance mapping curve, to obtain a second horizontal coordinate value and a second vertical coordinate value;
a second conversion unit, configured to separately perform linear-space-to-nonlinear-space conversion on the second horizontal coordinate value and the second vertical coordinate value, to obtain the initial luminance value and the adjusted luminance value; and
a second determining unit, configured to determine the luminance mapping curve based on a mapping relationship between the initial luminance value and the adjusted luminance value, wherein the luminance mapping curve belongs to the target nonlinear space.

**19.** The video signal processing apparatus according to any one of claims 13 to 17, wherein the saturation mapping curve belongs to target nonlinear space, a preset second original luminance mapping curve is a linear curve, and the video signal processing apparatus further comprises:

a third conversion unit, configured to separately perform linear-space-to-nonlinear-space conversion on a third horizontal coordinate value and a third vertical coordinate value that correspond to at least one sampling point on the second original luminance mapping curve, to obtain the initial luminance value and the adjusted luminance value; and
a third determining unit, configured to determine the luminance mapping curve based on a mapping relationship between the initial luminance value and the adjusted luminance value, wherein the luminance mapping curve belongs to the target nonlinear space.

**20.** The video signal processing apparatus according to any one of claims 13 to 19, wherein the video signal processing apparatus further comprises:
a luminance adjustment unit, configured to adjust the initial luminance value based on the luminance mapping curve, to obtain the adjusted luminance value.

**21.** The video signal processing apparatus according to claim 20, wherein the luminance adjustment unit is specifically configured to:
determine, based on a target first horizontal coordinate value corresponding to the initial luminance value, a target first vertical coordinate value corresponding to the target first horizontal coordinate as the adjusted luminance value.

**22.** The video signal processing apparatus according to claim 20, wherein the luminance adjustment unit is specifically configured to:
determine, based on a target third horizontal coordinate value corresponding to the initial luminance value, a target third vertical coordinate value corresponding to the target third horizontal coordinate as the adjusted luminance value.

23. A video signal processing apparatus, wherein the apparatus comprises a processor and a memory; and the processor is configured to invoke a software instruction in the memory to perform the method according to any one of claims 1 to 11.

24. A computer-readable storage medium, wherein the computer-readable storage medium stores an instruction, and when the instruction is run on a computer or a processor, the computer or the processor is enabled to perform the method according to any one of claims 1 to 11.

25. A computer program product, comprising an instruction, wherein when the computer program product runs on a computer or a processor, the computer or the processor is enabled to perform the method according to any one of claims 1 to 11.

FIG. 1a

FIG. 1b

FIG. 2a

FIG. 2b

FIG. 3a

EP 3 809 698 A1

**FIG. 3b**

**FIG. 3c**

45

S101

Determine a saturation adjustment factor corresponding to an initial
luminance value of a to-be-processed video signal

S102

Adjust a chrominance value of the to-be-processed video signal based
on the saturation adjustment factor

FIG. 4

FIG. 5

FIG. 6

701

Perform color space conversion on a video signal YUV0, to obtain an RGB-space linear display light signal RdGdBd

702

Calculate a display luminance value Yd of the signal RdGdBd based on color gamut of the linear display light signal RdGdBd

703

Convert the display luminance value Yd to visual linear space by using a PQ EOTF$^{-1}$ curve, to obtain NL_Yd

704

Perform luminance mapping on NL_Yd by using a first original luminance mapping curve that is nonlinear, to obtain a luminance value NL_Yt after the mapping

705

Convert, to linear space, the luminance value obtained after the mapping, to obtain a linear-space luminance value Yt

706

Calculate a linear luminance gain K

707

Determine, based on the linear luminance gain K, a linear display light signal RtGtBt obtained after the luminance mapping processing

FIG. 7

801

Calculate, based on a display luminance value Yd of a linear display light signal RdGdBd, a nonlinear display luminance value NL1_Yd that is in nonlinear space NLTF1 and that is obtained before luminance mapping

802

Calculate, based on a linear luminance value Yt obtained after the mapping, a nonlinear display luminance value NL1_Yt that is in the nonlinear space NLTF1 and that is obtained after the luminance mapping

803

Determine a saturation mapping factor SMCoef based on the nonlinear display luminance value NL1_Yd and the nonlinear display luminance value NL1_Yt

804

Determine a first chrominance component gain coefficient SMCoefa, and determine a second chrominance component gain coefficient SMCoefb

805

Keep a luminance value of a luminance component of a YUV signal unchanged, use a product U' of the first chrominance component adjustment factor SMCoefa and a chrominance value U of a first chrominance component as an adjusted chrominance value of the first chrominance component, and use a product V' of the second chrominance component adjustment factor SMCoefb and a chrominance value V of a second chrominance component as an adjusted chrominance value of the second chrominance component

FIG. 8

901

Determine, based on an original luminance mapping curve, a saturation mapping curve belonging to nonlinear space NLTF1

902

Determine, based on the saturation mapping curve, a saturation adjustment factor corresponding to an initial luminance value of a to-be-processed video signal

903

Determine a chrominance component adjustment factor of the to-be-processed video signal based on the saturation adjustment factor and a preset chrominance component gain coefficient

704

Adjust a chrominance value of the to-be-processed video signal based on the chrominance component adjustment factor

FIG. 9

1001

Determine, based on an original luminance mapping curve, a saturation mapping curve belonging to nonlinear space NLTF1

1002

Determine, based on the saturation mapping curve, a saturation adjustment factor corresponding to an initial luminance value of a to-be-processed video signal

1003

Determine, based on the saturation adjustment factor and a preset chrominance component gain coefficient, a chrominance component adjustment factor corresponding to the to-be-processed video signal

1004

Adjust a chrominance value of the to-be-processed video signal, namely, an HDR signal YUV0, based on the chrominance component adjustment factor, to obtain a video signal YUV1 whose chrominance value has been adjusted

1005

Perform color space conversion on the video signal YUV1, to obtain an RGB-space video signal RGB1

1006

Perform RGB-space luminance mapping on the video signal RGB1 based on the original luminance mapping curve, to obtain a video signal RGB2 after the luminance mapping

1007

Perform color space conversion on the video signal RGB2 obtained after the luminance mapping, to obtain a YUV signal YUV2 in the nonlinear space NLTF1

FIG. 10

Video signal processing apparatus 102

1101 First determining unit

1102 Adjustment unit

1103 First conversion unit

1104 Second conversion unit

1105 Second determining unit

1106 Third conversion unit

1107 Third determining unit

1108 Luminance adjustment unit

1109 Storage unit

FIG. 11

Video signal processing apparatus 102

1201 Main processor

1202 Memory

1203 Video processor

FIG. 12a

FIG. 12b

Video signal processing
apparatus 102

Main processor 1201

Generate a
saturation
mapping
curve

Generate a
luminance
mapping curve

Memory 1202

Store the
saturation
mapping
curve

Store the
luminance
mapping curve

Video processor 1203

HDR
signal

Perform
chrominance
adjustment
on the HDR
signal

HDR signal
obtained after
the chrominance
adjustment

Perform RGB-
space luminance
mapping on the
HDR signal
obtained after
the chrominance
adjustment

YCC-space
video
signal obtained
after the
chrominance
adjustment

FIG. 12c

$E'_R E'_G E'_B$    $E_R E_G E_B$    $E_R E_G E_B$    $E'_R E'_G E'_B$

**2020** → [ N to L ] → [ M ] → [ L to N ] → **709**

FIG. 13

$\gamma=1.2, L_W=1000, L_B=0$

```
┌──────────┐     ┌─────────────────────────┐     ┌──────────┐     ┌──────────┐     ┌──────────┐
│1000 cd/m²│ ──▶ │  ┌───────┐   ┌───────┐   │ ──▶ │ Display  │ ──▶ │   PQ     │ ──▶ │1000 cd/m²│
│   HLG    │     │  │ HLG   │   │ HLG   │   │     │  light   │     │  EOTF⁻¹  │     │   PQ     │
│          │     │  │OETF⁻¹ │   │ OOTF  │   │     │          │     │          │     │          │
└──────────┘     │  └───────┘   └───────┘   │     └──────────┘     └──────────┘     └──────────┘
                 └─────────────────────────┘
                         HLG EOTF
```

FIG. 14

## INTERNATIONAL SEARCH REPORT

| | International application No. |
|---|---|
| | **PCT/CN2019/090687** |

| A. | CLASSIFICATION OF SUBJECT MATTER |
|---|---|
| | H04N 9/64(2006.01)i; H04N 9/77(2006.01)i |

According to International Patent Classification (IPC) or to both national classification and IPC

| B. | FIELDS SEARCHED |
|---|---|

Minimum documentation searched (classification system followed by classification symbols)
H04N,G06T

Documentation searched other than minimum documentation to the extent that such documents are included in the fields searched

Electronic data base consulted during the international search (name of data base and, where practicable, search terms used)
CNPAT, CNKI, WPI, EPODOC, IEEE: 视频, 图像, 颜色, 亮度, 明度, 饱和度, 色调, 调节, 映射, 曲线, 函数, 因子, 参数, 色度, 非线性, 比值, video, adjust, bright+, map+, chrominance, luminance, color, compensat+, saturation, regulat+, curve

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 108933933 A (HUAWEI TECHNOLOGIES CO., LTD.) 04 December 2018 (2018-12-04) claims 1-25 | 1-25 |
| X | CN 105009580 A (DOLBY LABORATORIES LICENSING CORPORATION) 28 October 2015 (2015-10-28) cliams 1, 4, 16, and 17, description, paragraphs 133-144, 183, and 184, and figures 1-3 | 1-25 |
| A | CN 104364820 A (KONINKLIJKE PHILIPS N.V.) 18 February 2015 (2015-02-18) entire document | 1-25 |
| A | CN 107211130 A (THOMSON LICENSING LLC) 26 September 2017 (2017-09-26) entire document | 1-25 |
| A | CN 107657594 A (WUHAN UNIVERSITY) 02 February 2018 (2018-02-02) entire document | 1-25 |
| A | CN 104995903 A (KONINKLIJKE PHILIPS N.V.) 21 October 2015 (2015-10-21) entire document | 1-25 |
| A | CN 107005716 A (KONINKLIJKE PHILIPS N.V.) 01 August 2017 (2017-08-01) | |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 August 2019** | **28 August 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2019/090687** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2018152684 A1 (MICROSOFT TECHNOLOGY LICENSING, LLC) 31 May 2018 (2018-05-31)<br>    entire document | 1-25 |

Form PCT/ISA/210 (second sheet) (January 2015)

**INTERNATIONAL SEARCH REPORT**
Information on patent family members

International application No.

**PCT/CN2019/090687**

| Patent document cited in search report | | | Publication date (day/month/year) | Patent family member(s) | | | Publication date (day/month/year) |
|---|---|---|---|---|---|---|---|
| CN | 108933933 | A | 04 December 2018 | None | | | |
| CN | 105009580 | A | 28 October 2015 | IN | 2510KON2015 | A | 11 September 2015 |
| | | | | BR | 112015020009 | A2 | 18 July 2017 |
| | | | | RU | 2647636 | C2 | 16 March 2018 |
| | | | | ES | 2708954 | T3 | 12 April 2019 |
| | | | | US | 2016005349 | A1 | 07 January 2016 |
| | | | | CN | 105009580 | B | 29 September 2017 |
| | | | | EP | 2959682 | A2 | 30 December 2015 |
| | | | | RU | 2015134416 | A | 22 February 2017 |
| | | | | HK | 1211156 | A1 | 13 May 2016 |
| | | | | MX | 2015010845 | A | 01 December 2015 |
| | | | | JP | 6367839 | B2 | 01 August 2018 |
| | | | | KR | 20150120993 | A | 28 October 2015 |
| | | | | JP | 2016514395 | A | 19 May 2016 |
| | | | | MX | 346011 | B | 28 February 2017 |
| | | | | WO | 2014130343 | A2 | 28 August 2014 |
| | | | | EP | 2959682 | B1 | 05 December 2018 |
| | | | | ZA | 201505647 | B | 21 December 2016 |
| | | | | WO | 2014130343 | A3 | 16 October 2014 |
| CN | 104364820 | A | 18 February 2015 | BR | 112014027815 | A2 | 27 June 2017 |
| | | | | US | 2015221280 | A1 | 06 August 2015 |
| | | | | JP | 2015529890 | A | 08 October 2015 |
| | | | | MX | 2014013221 | A | 18 February 2015 |
| | | | | EP | 2836983 | B1 | 12 July 2017 |
| | | | | WO | 2014056679 | A1 | 17 April 2014 |
| | | | | CN | 104364820 | B | 10 April 2018 |
| | | | | RU | 2642335 | C2 | 24 January 2018 |
| | | | | JP | 5911643 | B2 | 27 April 2016 |
| | | | | US | 9230509 | B2 | 05 January 2016 |
| | | | | KR | 20150067089 | A | 17 June 2015 |
| | | | | RU | 2014143972 | A | 27 November 2016 |
| | | | | EP | 2836983 | A1 | 18 February 2015 |
| | | | | ES | 2641371 | T3 | 08 November 2017 |
| | | | | MX | 338258 | B | 11 April 2016 |
| | | | | ZA | 201407903 | B | 27 September 2017 |
| CN | 107211130 | A | 26 September 2017 | US | 2018007372 | A1 | 04 January 2018 |
| | | | | AU | 2016212243 | A1 | 10 August 2017 |
| | | | | BR | 112017015790 | A2 | 27 March 2018 |
| | | | | WO | 2016120209 | A1 | 04 August 2016 |
| | | | | KR | 20170110087 | A | 10 October 2017 |
| | | | | RU | 2017130386 | A3 | 17 July 2019 |
| | | | | JP | 2018507619 | A | 15 March 2018 |
| | | | | MX | 2017009748 | A | 27 October 2017 |
| | | | | EP | 3251084 | A1 | 06 December 2017 |
| | | | | RU | 2017130386 | A | 28 February 2019 |
| | | | | CA | 2975172 | A1 | 04 August 2016 |
| CN | 107657594 | A | 02 February 2018 | None | | | |
| CN | 104995903 | A | 21 October 2015 | EP | 2959672 | A1 | 30 December 2015 |
| | | | | WO | 2014128586 | A1 | 28 August 2014 |

Form PCT/ISA/210 (patent family annex) (January 2015)

**INTERNATIONAL SEARCH REPORT**
Information on patent family members

International application No.

**PCT/CN2019/090687**

| Patent document cited in search report | | | Publication date (day/month/year) | Patent family member(s) | | | Publication date (day/month/year) |
|---|---|---|---|---|---|---|---|
| | | | | JP | 6309978 | B2 | 11 April 2018 |
| | | | | US | 2015358646 | A1 | 10 December 2015 |
| | | | | RU | 2015139690 | A | 24 March 2017 |
| | | | | US | 10182247 | B2 | 15 January 2019 |
| | | | | CN | 109064433 | A | 21 December 2018 |
| | | | | JP | 2018110403 | A | 12 July 2018 |
| | | | | MX | 350910 | B | 25 September 2017 |
| | | | | RU | 2633128 | C2 | 11 October 2017 |
| | | | | MX | 2015010673 | A | 16 December 2015 |
| | | | | US | 9699482 | B2 | 04 July 2017 |
| | | | | US | 2017339433 | A1 | 23 November 2017 |
| | | | | CN | 104995903 | B | 09 July 2019 |
| | | | | JP | 2016517637 | A | 16 June 2016 |
| | | | | BR | 112015019787 | A2 | 18 July 2017 |
| CN | 107005716 | A | 01 August 2017 | JP | 6356349 | B2 | 11 July 2018 |
| | | | | JP | 2017536735 | A | 07 December 2017 |
| | | | | EP | 3205082 | B1 | 04 April 2018 |
| | | | | WO | 2016055178 | A1 | 14 April 2016 |
| | | | | TR | 201808347 | T4 | 23 July 2018 |
| | | | | US | 2017223367 | A1 | 03 August 2017 |
| | | | | EP | 3205082 | A1 | 16 August 2017 |
| | | | | US | 10313687 | B2 | 04 June 2019 |
| US | 2018152684 | A1 | 31 May 2018 | WO | 2018098095 | A1 | 31 May 2018 |
| | | | | US | 10218952 | B2 | 26 February 2019 |

Form PCT/ISA/210 (patent family annex) (January 2015)

**EP 3 809 698 A1**

## REFERENCES CITED IN THE DESCRIPTION

**Patent documents cited in the description**

- CN 201810733132

- CN 201810799603